# EUROPEAN PATENT SPECIFICATION

(11) **EP 3 113 490 B1**
(45) Date of publication and mention of the grant of the patent: **24.07.2019**
(21) Application number: 15755027.8
(22) Date of filing: 15.01.2015
(51) Int. Cl.: H04N 19/30, H04N 19/132, H04N 19/164, H04N 19/187, H04M 3/56, H04L 12/18, H04N 7/15

(54) **COMMUNICATION DEVICE, COMMUNICATION SYSTEM, COMMUNICATION CONTROL METHOD, AND PROGRAM**
KOMMUNIKATIONSVORRICHTUNG, KOMMUNIKATIONSSYSTEM, KOMMUNIKATIONSSTEUERUNGSVERFAHREN UND PROGRAMM
DISPOSITIF DE COMMUNICATION, SYSTÈME DE COMMUNICATION, PROCÉDÉ DE COMMANDE DE COMMUNICATION, ET PROGRAMME

(30) Priority: 26.02.2014 JP 2014035833
(43) Date of publication of application: 04.01.2017
(73) Proprietor: Ricoh Company, Ltd., Tokyo 143-8555 (JP)
(72) Inventor: NAGAMINE, Shoh, Tokyo 143-8555 (JP); IMAI, Takuya, Tokyo 143-8555 (JP); MORITA, Kenichiro, Tokyo 143-8555 (JP)
(74) Representative: SSM Sandmair
(86) International application number: PCT/JP2015/050969
(87) International publication number: WO 2015/129319

(56) References cited:
- WO-A2-2007/076486
- JP-A- H08 274 961
- JP-A- 2007 150 916
- US-A1- 2007 120 958
- US-A1- 2009 033 739

## Description

### Field

The present invention relates to a communication device, a communication system, and a communication control method.

### Background

For communication systems, such as a TV conference system, that realize a remote conference using a communication network, there is a technology for transmitting/receiving encoded data obtained through encoding using a scalable coding format between communication devices serving as terminals. For example,

Patent Document 1 discloses a TV conference system including a transmitting terminal that transmits encoded data obtained through scalable coding using the H.264/SVC format, a receiving terminal that receives and decodes the encoded data, and a conference bridge connecting the transmitting terminal and the receiving terminal. In the TV conference system described in Patent Document 1, when relaying the encoded data from the transmitting terminal and transmitting the encoded data to the receiving terminal, the conference bridge determines the network state of the receiving terminal. The conference bridge then chooses encoded data of a video stream in quality suitable to the state of the receiving terminal from among the encoded data that is obtained through scalable coding in the transmitting terminal and then transmitted and transmits the chosen encoded data to the receiving terminal.

Patent Document 2 discloses a method and a system for scalable coding through H264/SVC wherein for various participants requesting different bit rates and different spatial and temporal resolutions, a sending participant may produce a video signal at multiple temporal resolutions.

Patent Document 3 discloses a system and a method for notifying received picture quality to sending party to control picture quality of sent image.

### Summary

### Technical Problem

In the conventional technology, however, the authority to determine the state of the receiving terminal to choose, with respect to the encoded data obtained through scalable coding in the transmitting terminal, encoded data to be actually transmitted to the receiving terminal exists in a relay device, such as the conference bridge described in Patent Document 1. For this reason, regardless of the state of the receiving terminal, the transmitting terminal transmits all the encoded data obtained through scalable coding according to a given setting to the relay device and data in quality normally unnecessary may be transmitted to the relay device. In this case, the network bandwidth of the transmitting terminal is used more than necessary.

### Solution to Problem

To solve the above-described problem, one aspect of the present invention is a communication device configured to transmit/receive encoded data that is obtained through scalable coding to/from at least one other communication device, decode the received encoded data, and reproduce and output the data, as defined in claim 1. Another aspect of the present invention is a communication system as defined in claim 5. Another aspect of the present invention is a communication control method as defined in claim 6.

Other advantageous aspects of the present invention are defined in the appended dependent claims.

### Advantageous Effects of Invention

The present invention provides an effect that a setting for scalable coding performed by the transmitting terminal is controlled according to the state of the receiving terminal, and the use of the network bandwidth of the transmitting terminal more than necessary can be prevented.

### Brief Description of Drawings

FIG. 1 is a schematic configuration diagram of a TV conference system according to an embodiment.
FIG. 2 is a conceptual diagram illustrating an overview of communications in the TV conference system according to the embodiment.
FIG. 3 is a conceptual diagram illustrating a method of coding video image data.
FIG. 4 is a conceptual diagram schematically illustrating that a relay server relays video image data and audio data.
FIG. 5 is a block diagram illustrating an exemplary hardware configuration of a terminal.
FIG. 6 is a block diagram illustrating an exemplary hardware configuration of the relay server.
FIG. 7 is a block diagram illustrating an example of a functional configuration of the terminal.
FIG. 8 is a block diagram illustrating details of a quality control module of the terminal.
FIG. 9 is a conceptual diagram illustrating specific exemplary reproduction quality information that is generated by a notification unit.
FIG. 10 is a conceptual diagram illustrating a specific exemplary notification of the reproduction quality information between terminals at multiple bases.
FIG. 11 is a conceptual diagram illustrating specific exemplary control performed by an encoding setting control unit on a setting for encoding performed by the encoding unit.
FIG. 12 is a flowchart illustrating a specific exemplary process procedure performed by the encoding setting control unit.
FIG. 13 is a sequence chart illustrating an overview of a process of transmitting/receiving a video image between a transmitting terminal and a receiving terminal.
FIG. 14 is a conceptual diagram illustrating specific exemplary reproduction quality information that is generated by the notification unit.
FIG. 15 is a conceptual diagram illustrating a specific exemplary notification of the reproduction quality information between terminals at multiple bases.
FIG. 16 is a conceptual diagram illustrating specific exemplary control performed by the encoding setting control unit on the setting for encoding performed by the encoding unit.
FIG. 17 is a conceptual diagram illustrating specific exemplary control performed by the encoding setting control unit on the setting for encoding performed by the encoding unit.
FIG. 18 is a flowchart illustrating a specific exemplary process procedure performed by the encoding setting control unit.
FIG. 19 is a conceptual diagram illustrating specific exemplary control performed by the encoding setting control unit on the setting for encoding performed by the encoding unit.
FIG. 20 is a conceptual diagram illustrating specific exemplary control performed by the encoding setting control unit on the setting for encoding performed by the encoding unit.

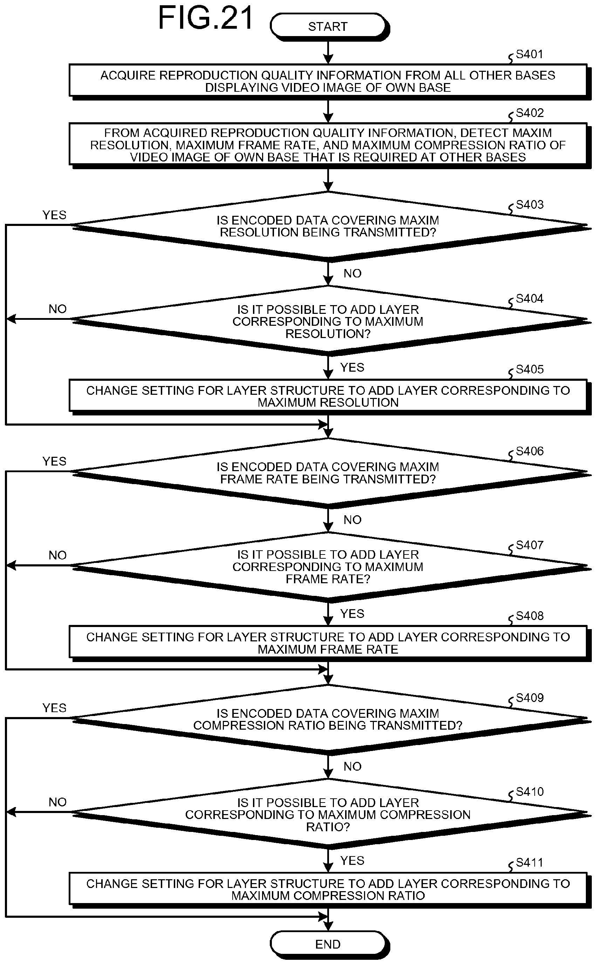

FIG. 21 is a flowchart illustrating a specific embodiment of the communication device, the communication system, and the communication control method according to the present invention will be described in detail below. As an exemplary communication system to which the invention is applied, a TV conference system (also referred to as a "video conference system") will be exemplified, which is a TV conference system that transmits/receives video image data and audio data between multiple TV conference terminals (corresponding to "communication devices") to realize a remote conference at multiple bases. In the TV conference system, scalable coding is performed on video image data that is captured by a TV conference terminal, the encoded data is transmitted to another TV conference terminal, and the other TV conference terminal decodes the encoded data and reproduces and outputs the data. Note that communication systems to which the invention can be applied are not limited to this example. The present invention can be applied widely to various communication systems that transmit/receive encoded data obtained through scalable coding between multiple communication devices and to various communication terminals that are used in the communication systems.

### (First Embodiment)

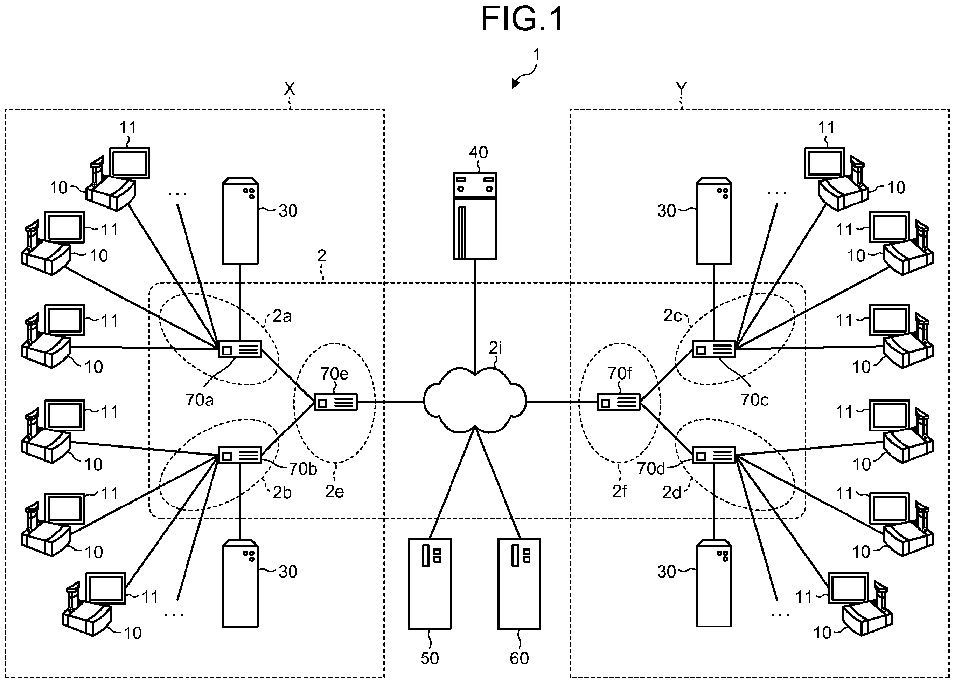

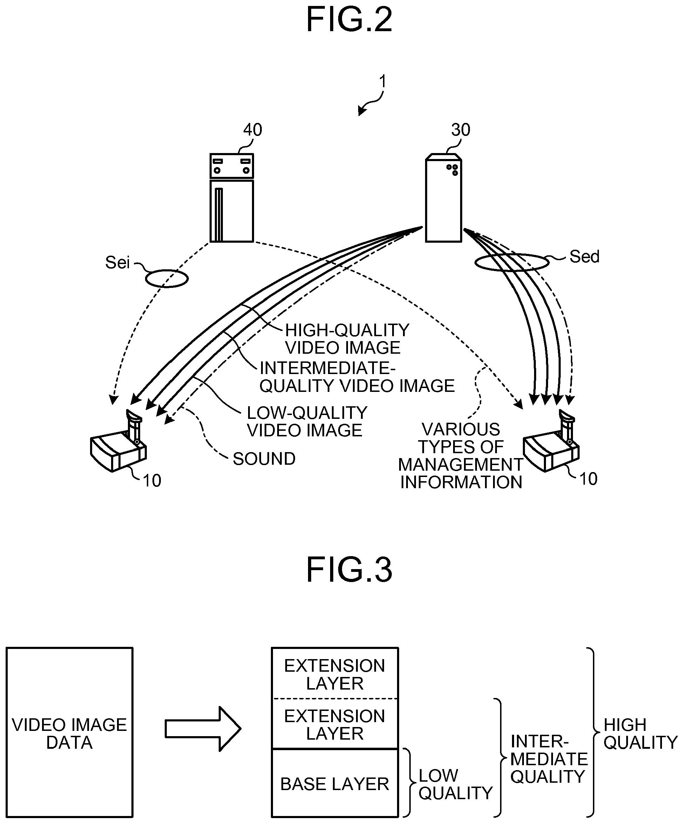

FIG. 1 is a schematic configuration diagram of a TV conference system 1 according to the present embodiment. FIG. 2 is a conceptual diagram illustrating an overview of communications in the TV conference system 1 according to the present embodiment. FIG. 3 is a conceptual diagram illustrating a method of coding video image data according to the present embodiment.

As illustrated in FIG. 1, the TV conference system 1 according to the present embodiment includes multiple TV conference terminals (simply referred to as to the present embodiment.

As illustrated in FIG. 1, the TV conference system 1 according to the present embodiment includes multiple TV conference terminals (simply referred to as "terminals" below) 10 and multiple displays 11 that are set at respective bases, multiple relay servers 30, a management server 40, a program provision server 50, and a maintenance server 60.

The display 11 has a wired or wireless connection to the terminal 10. The display 11 may be configured to be integrated with the terminal 10.

The terminals 10 and the relay servers 30 are connected to routers as, for example, nodes of local area networks (LAN). The router is a network device that chooses a route for data transmission. In the example illustrated in FIG. 1, a router 70a in a LAN 2a, a router 70b in a LAN 2b, a router 70c in a LAN 2c, a router 70d in a LAN 2d, a router 70e that is connected to the router 70a and the router 70b with a dedicated line 2e and that is connected to the Internet 2i, and a router 70f that is connected to the router 70c and the router 70d with a dedicated line 2f and that is connected to the Internet 2i are exemplified.

It is assumed that the LAN 2a and the LAN 2b are constructed at different locations in an area X and the LAN 2c and the LAN 2d are constructed at different locations in an area Y. For example, the area X is Japan, the area Y is the U.S.A., the LAN 2a is constructed in an office in Tokyo, the LAN 2b is constructed in an office in Osaka, the LAN 2c is constructed in an office in N.Y., and the LAN 2d is constructed in an office in Washington D.C. According to the present embodiment, the LAN 2a, the LAN 2b, the dedicated line 2e, the Internet 2i, the dedicated line 2f, the LAN 2c, and the LAN 2d constitute a communication network 2. The communication network 2 may include sections where not only wired communications but also wireless communications according to WiFi (Wireless Fidelity) or Bluetooth (trademark) are performed.

In the TV conference system 1 according to the present embodiment, video image data and audio data are transmitted and received among the multiple terminals 10 via the relay server 30. As illustrated in FIG. 2, a management information session Sei for transmitting/receiving various types of management information via the management server 40 is established between the multiple terminals 10. Furthermore, a data session Sed for transmitting/receiving video image data and audio data via the relay server 30 is established between the multiple terminals 10. Particularly, the video image data that is transmitted and received via the data session Sed is encoded data obtained through scalable coding and, for example, encoded data of a high-quality video image, encoded data of an intermediate-quality video image, and encoded data of a low-quality video image are transmitted and received in different channels, respectively. Because the technology disclosed in Japanese National Publication of International Patent Application No. 2012-138893 can be used for the process for establishing the management information session Sei and the data session Sed between the multiple terminals 10, detailed descriptions of the process will be omitted herein.

The H. 264/SVC (H.264/AVC Annex G) encoding format is known as a standard encoding format for scalable coding on video image data. Through the H. 264/SVC encoding format, video image data is converted into data having a layered structure, the layered-structure data is encoded as a set of multiple sets of video image data that differ in quality, and the sets of encoded data corresponding to the respective sets of video image data can be transmitted and received in multiple channels. According to the present embodiment, the encoded data obtained by encoding the video image data using the 264/SVC encoding format is transmitted and received between the multiple terminals 10.

Specifically, as illustrated in FIG. 3, the video image data is converted into layered-structure data having a base layer and extension layers (lower and upper layers). The video image data including only the base layer serves as low-quality video image data, the video image data consisting of the base layer and the extension layer that is the lower layer serves as intermediate-quality video image data, and video image data consisting of the base layer, the extension layer that is the lower layer, and the extension layer that is the upper layer serves as high-quality video image data. The sets of video image data having the respective qualities are encoded and then are transmitted in the three channels.

The quality of video image data includes the resolution that is spatial scalability and the frame rate that is time scalability. The resolution is a screen resolution (also referred to as a screen mode) of a video image that is represented by the number of pixels in the vertical and horizontal directions. According to the present embodiment, both the resolution and the frame rate are dealt with as the quality of video image data. At least one of the resolution and the frame rate of the intermediate-quality video image data is higher than of the low-quality video image data. At least one of the resolution and the frame rate of the high-quality video image data is higher than of the intermediate-quality video image data. According to the present embodiment, the quality of the video image data is classified into low, middle and high three stages. Alternatively, the quality may be classified into two stages or may be finely classified into four or more stages. Furthermore, according to the present embodiment, the quality of video image data containing the resolution and the frame rate is dealt with. Alternatively, the resolution and the frame rate may be dealt with independently. Furthermore, only any one of the resolution and the frame rate may be dealt with as the quality of video image data or another parameter (for example, the S/N ratio), other than the resolution and the frame rate, relating to the quality may be added.

The relay server 30 is a computer that relays transmission of video image data and audio data between the multiple terminals 10. The video image data relayed by the relay server 30 is, as described above, the encoded data obtained through scalable coding using the above-described H.264/SVC format. If the conventional technology is applied to the relay server 30, the relay server 30 would receive sets of encoded data in all the qualities obtained through scalable coding in multiple channels from terminal 10 that transmits the video image data and, in accordance with the network state of the receiving terminal 10 and the display resolution of the video image, choose a channel corresponding to required quality and transmit only the encoded data in that channel to the receiving terminal 10. In the conventional technology, however, because the transmitting terminal 10 transmits the sets of encoded data in all the qualities obtained through scalable coding regardless the state of the receiving terminal 10, the network bandwidth between the transmitting terminal 10 and the relay server 30 is used more than necessary.

For this reason, according to the present embodiment, the transmitting terminal 10 is capable of knowing the quality of a video image that is actually reproduced and output by the receiving terminal 10 (i.e., that is displayed on the display 11) and the transmitting terminal 10 controls the setting for encoding the encoded data to be transmitted to the receiving terminal 10 according to the quality of the video image that is actually reproduced and output by the receiving terminal 10. Thereby, it becomes possible to transmit only the encoded data in the quality required by the receiving terminal 10 from the transmitting terminal 10 via the relay server 30 to the receiving terminal 10 and thus the inconvenience that the network bandwidth between the transmitting terminal 10 and the relay server 30 is used more than necessary can be effectively prevented.

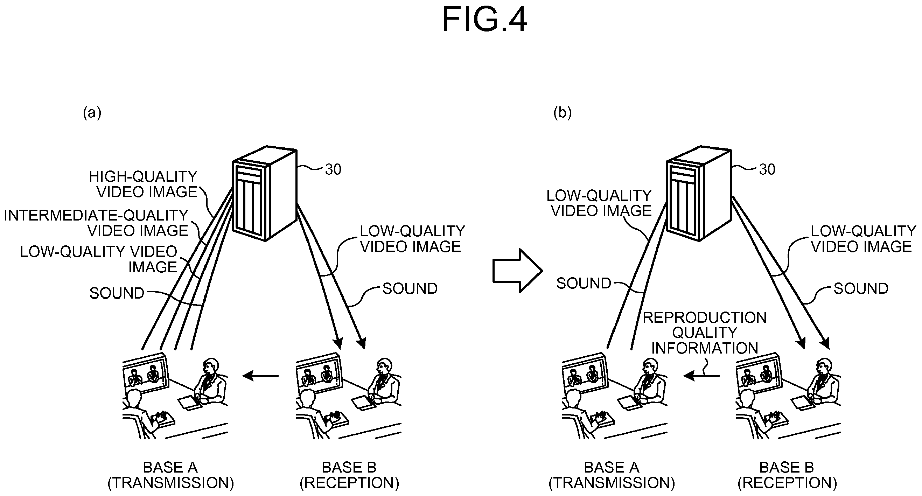

FIG. 4 is a conceptual diagram schematically illustrating that the relay server 30 relays video image data and audio data. FIG. 4(a) illustrates an example where the conventional technology is used and FIG. 4(b) illustrates an example according to the present embodiment. In the examples in FIGS. 4(a) and 4(b), video image data and audio data are transmitted from the terminal 10 (not illustrated) at the base A to the terminal 10 (not illustrated) at the base B via the relay server 30 and, at the base B, a low-quality video image is reproduced and output (represented on the display 11).

In the conventional technology, as illustrated in FIG. 4(a), encoded data of video images in three channels for high-quality video images, intermediate-quality video images, and low-quality video images and sound is transmitted from the terminal 10 (not illustrated) at the base A serving as a transmitting terminal to the relay server 30. The relay server 30 chooses the channel for low-quality video images from among the three channels for high-quality video images, intermediate-quality video images, and low-quality video images according to the state of the receiving base B and transmits the encoded data in channel for low-quality video images and the audio channel to the terminal 10 (not illustrated) at the base B. As described above, in the conventional technology, although the video image that is reproduced and output at the base B is in low quality, the data of the high-quality video image and the data of the intermediate-quality video image are transmitted from the base A to the relay server 30 and therefore the bandwidth of the network between the base A and the relay server 30 is used more than necessary.

On the other hand, according to the present embodiment, as illustrated in FIG. 4(b), the terminal 10 (not illustrated) at the base B serving as the receiving terminal notifies the terminal 10 at the base A serving as the transmitting terminal of reproduction quality information representing the quality (low quality) of the video image from the base A that is being transmitted and output. On the basis of the reproduction quality information that is notified from the terminal 10 at the base B, the terminal 10 (not illustrated) at the base A serving as the transmitting terminal then changes the encoding setting for scalable coding on the video image data such that no high-quality video image and no intermediate-quality video image are contained. As a result, only encoded data in the low-quality video image channel and the audio channel are transmitted from the terminal 10 at the base A to the relay server 30, and thus the inconvenience that the bandwidth of the network between the base A and the relay server 30 is used more than necessary can be effectively prevented.

The notification of the reproduction quality information from the terminal 10 at the base B to the terminal 10 at the base A can be performed using the above-described management information session Sei. The notification of the reproduction quality information from the terminal 10 at the base B to the terminal 10 at the base A may be made via the relay server 30 (via a session different from the data session Sed).

The above-described characteristic processing according to the present embodiment can be implemented by, for example, adding a new function, such as a function of notifying another terminal of the above-described reproduction quality information or a function of controlling the encoding setting on the basis of the reproduction quality information that is notified from another terminal 10, to the terminal 10. The specific configuration example of the terminal 10 including those functions will be described in detail below.

The management server 40 is a computer that manages the overall TV conference system 1 according to the present embodiment. For example, the management server 40 performs management on the state of each terminal 10 that is registered, management of the state of the relay device 30, management of login of the users who use terminals 10, management of the data session Sed that is established between the multiple terminal 10, etc.

Furthermore, according to the present embodiment, as described above, depending on in which quality a video image that is reproduced and output by the receiving terminal 10 is, the transmitting terminal 10 controls the setting for encoding the video image data so as not to transmit video image data in quality higher than required. For this reason, the receiving terminal 10 is not able to reproduce and output video image data in quality exceeding quality of the video image data that is encoded by the transmitting terminal 10; however, when the network state of the receiving terminal 10 improves or when the display layout changes, it may be preferable to reproduce and output video image data in quality higher than quality of the video image data that is currently being output and reproduced. In that case, it is preferable that the management server 40 accept a request for improving the quality of the video image data from the receiving terminal 10 using the above-described management information session Sei and notify the transmitting terminal 10 of the request, and, according to the request from the receiving terminal 10, the transmitting terminal 10 change the encoding setting so as to encode video image data having higher quality.

The program provision server 50 is a computer that provides various programs to the terminals 10, the relay servers 30, the management server 40, and the maintenance server 60. For example, the program provision server 50 stores a terminal program for implementing various functions in the terminals 10 and is capable of transmitting the terminal program to the terminals 10. The program provision server 50 stores a relay server program for implementing various functions in the relay servers 30 and is capable of transmitting the relay server program to the relay servers 30. The program provision server 50 further stores a management server program for implementing various functions in the management server 40 and is capable of transmitting the management server program to the management server 40. The program provision server 50 further stores a maintenance server program for implementing various functions in the maintenance server 60 and is capable of transmitting the maintenance server program to the maintenance server 60.

The maintenance server 60 is a computer that performs maintenance, management and protection of at least one of the terminals 10, the relay servers 30, the management server 40, and the program provision server 50. For example, when the maintenance server 60 is set domestically and the terminals 10, the relay servers 30, the management server 40, or the program provision server 60 is set abroad, the maintenance server 60 remotely performs maintenance, such as maintenance, management and protection of at least one of the terminals 10, the relay servers 30, the management server 40, and the program provision server 50 via the communication network 2.

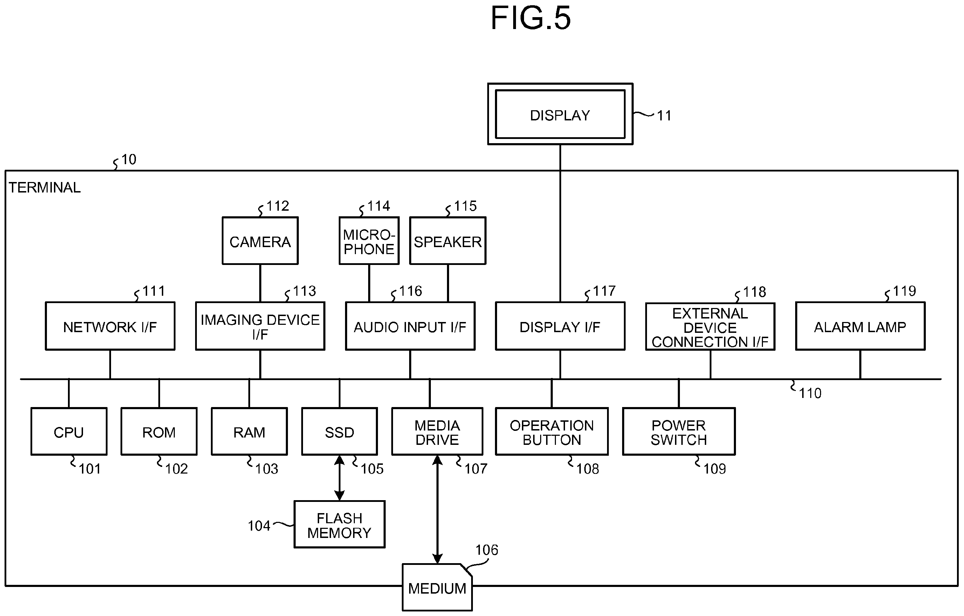

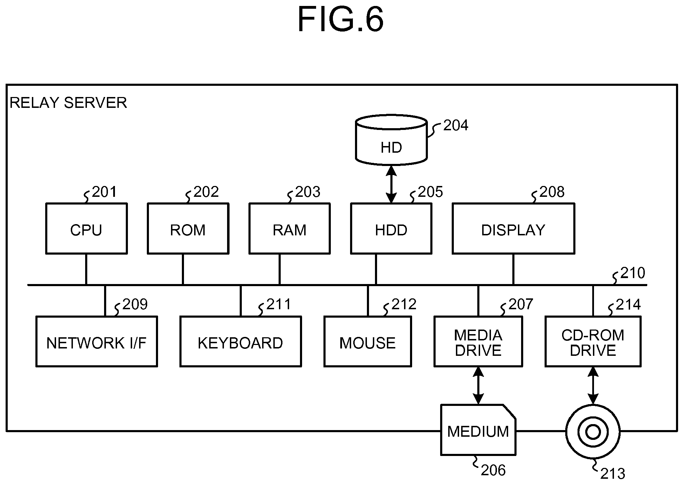

The hardware configuration of the terminal 10, the relay server 30, the management server 40, and the program provision server 50 of the TV conference system 1 according to the present embodiment will be described. FIG. 5 illustrates an exemplary hardware configuration of the terminal 10, and FIG. 6 illustrates an exemplary hardware configuration of the relay server 30. Because the management server 40, the program provision server 50, and the maintenance server 60 can employ the same hardware configuration as the relay server 30, the illustration is omitted.

As illustrated in FIG. 5, the terminal 10 includes a CPU (Central Processing Unit) 101 that controls overall operations of the terminal 10; a ROM (Read Only Memory) 102 that stores a program, such as an IPL (Initial Program Loader), used to drive the CPU 101; a RAM (Random Access Memory) 103 that is used as a work area of the CPU 101; a flash memory 104 that stores various types of data, such as the terminal program, image data, and audio data; a SSD (Solid State Drive) 105 that controls read/write of various types of data from/to the flash memory 104 according to the control of the CPU 101; a media drive 107 that controls read/write (storage) of data from/to a recording medium 106, such as a flash memory; an operation button 108 that is operated to, for example, choose another terminal 10 to be communicated with; a power switch 109 for switching on/off the terminal 10; and a network I/F (Interface) 111 for sending data using the communication network 2.

The terminal 10 further includes a built-in camera 112 that captures images of a subject to acquire image data according to the control of the CPU 101; an imaging device I/F 113 that controls driving of the camera 112; a built-in microphone 114 that inputs sound; a built-in speaker 115 that outputs sound; an audio input/output I/F 116 that processes the input and output of an audio signal between the microphone 114 and the speaker 115 according to the control of the CPU 101; a display I/F 117 that sends data of a display image to the display 11 according to the control of the CPU 101; an external device connection I/F 118 for connecting various external devices; an alarm lamp 119 that alerts abnormality with respect to the various functions of the terminal 10; and a bus line 110, such as an address bus and a data bus, for electrically connecting the above-described components.

The camera 112, the microphone 114 and the speaker 115 are not necessarily built in the terminal 10, and may be configured to be external components. The display 11 may be configured to be built in the terminal 10. It is assumed that the display 11 is a display device, such as s liquid crystal panel. Alternatively, the display 11 may be a projection device, such as a projector. The hardware configuration of the terminal 10 illustrated in FIG. 5 is an example only and hardware other than the above-described hardware may be added.

The terminal program that is provided from the program provision server 50 is stored in, for example, the flash memory 104 and is loaded into the RAM 103 and executed according to the control of the CPU 101. It suffices if the memory for storing the terminal program be a non-volatile memory, and a EEPROM (Electrically Erasable and Programmable ROM), or the like, may be used instead of the flash memory 104. The terminal program may be provided by recording the terminal program in a file in an installable form or an executable form in a recording medium, such as the computer-readable recording medium 106. The terminal program may be provided as a built-in program that is previously stored in, for example, the ROM 102.

As illustrated in FIG. 6, the relay server 30 includes a CPU 201 that controls overall operations of the relay server 30; a ROM 202 that stores a program, such as IPL, used to drive the CPU 201; a RAM 203 that is used as a work area of the CPU 201; a HD (Hard Disk) 204 that stores various types of data, such as the relay server program; an HDD (HD Drive) 205 that controls read/write of various types of data from/in the HD 204 according to the control of the CPU 201; a media drive 207 that controls read/write (storage) of data from/to a recording medium 206, such as a flash memory; a display 208 that displays various types of information; a network I/F 209 for sending data using the communication network 2; a keyboard 211; a mouse 212; a CD-ROM drive 214 that controls read/write of various types of data from/in a CD-ROM (Compact Disc Read Only Memory) 213 serving as an exemplary detachable recording medium; and a bus line 210, such as an address bus and a data bus, for electrically connecting the above-described components.

The rely server program that is provided from the above-described program provision server 50 is stored in, for example, the HD 204 and the rely server program is loaded into the RAM 203 and executed according to the control of the CPU 201. The rely server program may be provided by recording the rely server program in a file in an installable form or an executable form in a computer-readable recording medium, such as the recording medium 206 or the CD-ROM 213. The relay server program may be provided as a built-in program that is previously stored in, for example, the ROM 102.

The management server 40 may employ the same hardware configuration as the relay server 30 illustrated in FIG. 6. Note that the HD 204 records the management server program that is provided from the program provision server 50. Also in this case, the management server program may be provided by recording the management server program in a file in an installable form or an executable form in a computer-readable recording medium, such as the recording medium 206 or the CD-ROM 213. The management server program may be provided as a built-in program that is previously stored in, for example, the ROM 202.

The program provision server 50 can employ the same hardware configuration as the relay server 30 illustrated in FIG. 6. Note that, in addition to the program for implementing the program provision function in the program provision server 50, the terminal program to be provided to the terminals 10, the relay server program to be provided to the relay server 30, and the management server program to be provided to the management server 40 are recorded in the HD 204.

The maintenance server 60 can employ the same hardware configuration as the relay server 30 illustrated in FIG. 6. Note that, the maintenance server program that is provided from the program provision server 50 is recorded in the HD 204. Also in this case, the maintenance server program may be provided by recording the maintenance server program in a file in an installable form or an executable form in a computer-readable recording medium, such as the recording medium 206 or the CD-ROM 213. The maintenance server program may be provided as a built-in program that is previously stored in, for example, the ROM 202.

As another exemplary detachable recording medium, there is a computer-readable recording medium, such as a CD-R (Compact Disc Recordable), a DVD (Digital Versatile Disk), and a Blu-ray disc. The above-described various programs may be recorded in the recording medium and provided.

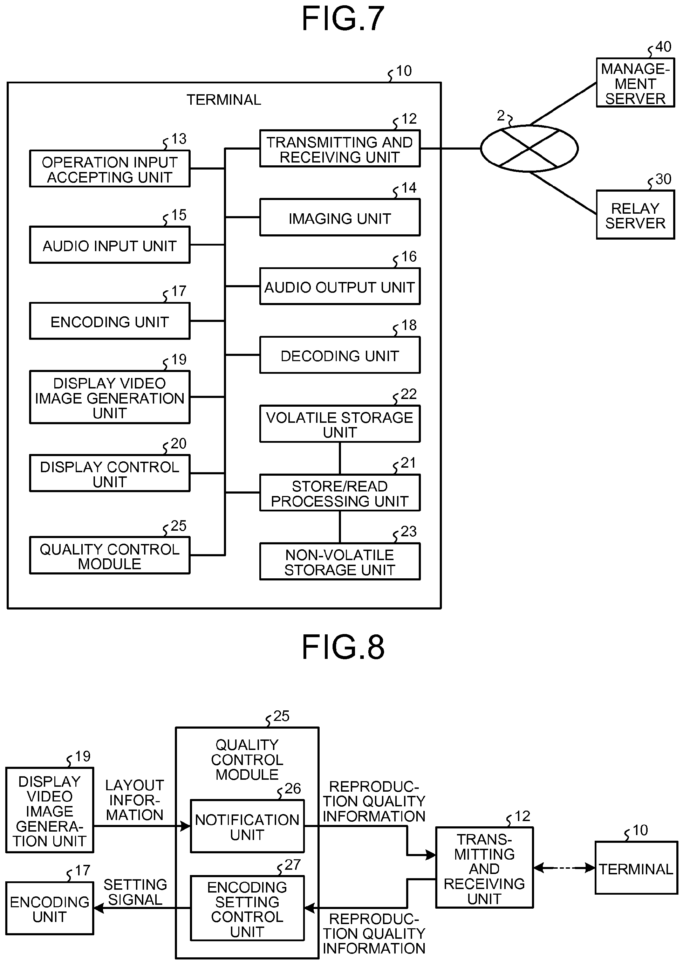

The functional configuration of the terminal 10 will be described. FIG. 7 is a block diagram of an exemplary functional configuration of the terminal 10, and FIG. 8 is a block diagram illustrating details of a quality control module 25 of the terminal 10. As illustrated in FIG. 7, the terminal 10 includes a transmitting and receiving unit 12, an operation input accepting unit 13, an imaging unit 14, an audio input unit 15, an audio output unit 16, an encoding unit 17, a decoding unit 18, a display video image generation unit 19, a display control unit 20, a store/read processing unit 21, a volatile storage unit 22, a non-volatile storage unit 23, and the quality control module 25.

The transmitting and receiving unit 12 transmits/receives various types of data (or information) to/from another terminal 10, the relay server 30, the management server 40, etc., via the communication network 2. The transmitting and receiving unit 12 is implemented with, for example, the network I/F 111 and the CPU 101 illustrated in FIG. 5.

The operation input accepting unit 13 accepts various input operations performed by a user who uses the terminal 10. The operation input accepting unit 13 is implemented with, for example, the operation button 108, the power switch 109, and the CPU 101.

The imaging unit 14 captures a video image of the base at which the terminal 10 is set and outputs the video image data. The imaging unit 14 is implemented with, for example, the camera 112, the imaging device I/F 113, and the CPU 101.

The audio input unit 15 inputs sound at the base at which the terminal 10 is set and outputs audio data. The audio input unit 15 is implemented with, for example, the microphone 114, the audio input/output I/F 116, and the CPU 101 that are illustrated in FIG. 5.

The audio output unit 16 reproduces and output audio data. The audio output unit 16 is implemented with, for example, the speaker 115, the audio input/output I/F 116, and the CPU 101 that are illustrated in FUG. 5.

The encoding unit 17 encodes the video image data that is output from the imaging unit 14 and the audio data that is output from the audio input unit 15 to generate encoded data. Particularly with respect to encoding of video image data, the encoding unit 17 performs scalable coding on video image data according to the H.264/SVC encoding format. The encoding unit 17 is configured to be capable of changing the setting for scalable coding on video image data (for example, setting for the layer structure of data to be encoded) in accordance with a setting signal from the quality control module 25, which will be described below. The encoding unit 17 is implemented, for example, by the CPU 101 illustrated in FIG. 5 executing an encoding/decoding program (video-image/audio codec) that is contained in the above-described terminal program.

The decoding unit 18 decodes the encoded data that is transmitted from another terminal 10 via the relay server 30 and outputs the video image data or the audio data before encoded. The decoding unit 18 is implemented, for example, by the CPU 101 executing the encoding/decoding program (video-image/audio codec) that is contained in the above-described terminal program.

The display video image generation unit 19 uses the video image data decoded by the decoding unit 18 to generate a display video image to be displayed (reproduced and output) on the display 11. For example, when the video image data decoded by the decoding unit 18 contains sets of video image data that are transmitted from multiple terminals 10 at multiple bases, the display video image generation unit 19 generates a display video image containing each of the sets of video image data in a screen according to a predetermined layout setting or a layout setting specified by the user. The display video image generation unit 19 also has a function of passing, to the quality control module 25, which will be described below, information on the layout of the generated display video image, specifically, layout information representing from which base a video image comes and in which size and at which frame rate the video image is contained in the display video image. The display video image generation unit 19 is implemented, for example, by the CPU 101 illustrated in FIG. 5 executing a display video image generation program that is contained in the above-described terminal program.

The display control unit 20 performs control for displaying (reproducing and outputting) the display video image, which is generated by the display video image generation unit 19, on the display 11. The display control unit 20 is implemented with, for example, the display I/F 117 and the CPU 101 illustrated in FIG. 5.

The store/read processing unit 21 performs a process of storing/reading various types of data in/from the volatile storage unit 22 or the non-volatile storage unit 23. The store/read processing unit 21 is implemented with, for example, the SSD 105 and the CPU 101 that are illustrated in FIG. 5. The volatile storage unit 22 is implemented with, for example, the RAM 103 illustrated in FIG. 5. The non-volatile storage unit 23 is implemented with, for example, the flash memory 104 illustrated in FIG. 5.

The quality control module 25 is a module that performs characteristic processing on the terminal 10 according to the present embodiment. The quality control module 25 is implemented, for example, by the CPU 101 illustrated in FIG. 5 executing a quality control program that is contained in the above-described terminal program. The quality control module 25 includes, as illustrated in FIG. 8, a notification unit 26 and an encoding setting control unit 27.

On the basis of the above-described layout information that is passed from the display video image generation unit 19, the notification unit 26 generates the reproduction quality information representing the quality of a video image from another base that is displayed by the display 11 as a display video image. The notification unit 26 then notifies, via the transmitting and receiving unit 12, the other terminal 10 from which the video image is transmitted of the generated reproduction quality information.

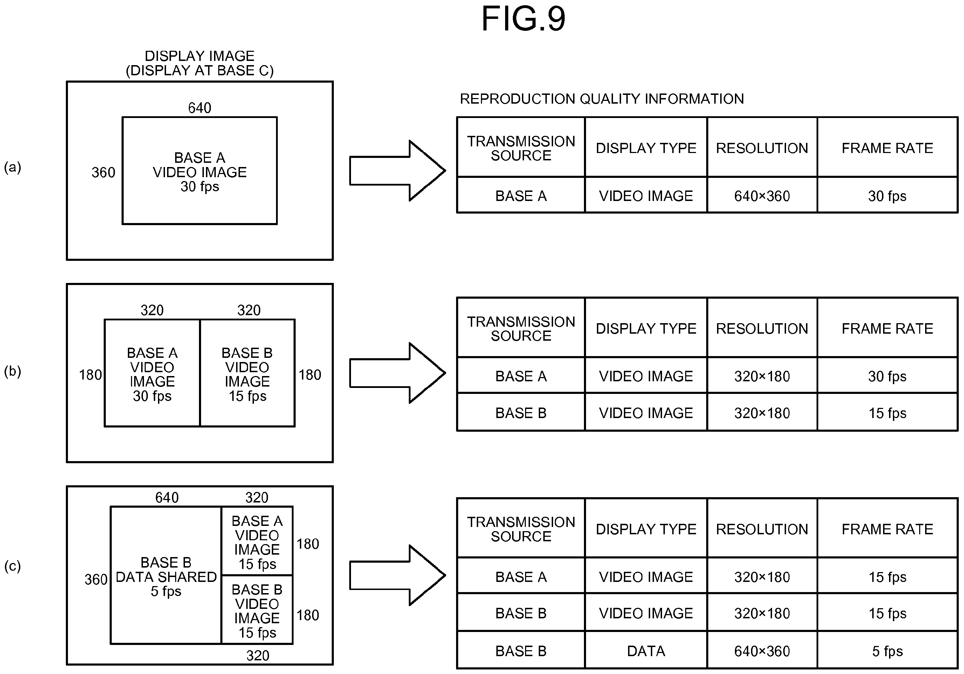

FIG. 9 is a conceptual diagram of specific exemplary reproduction quality information that the notification unit 26 generates. FIG. 9 represents the specific exemplary quality information that is generated by the terminal 10 at the base C in a case where a video image is transmitted and received between terminals 10 at three bases that are the base A, the base B and the base C.

In the example in FIG. 9(a), the display video image displayed on the display 11 at the base C contains only a video image from the base A, and the video image from the base A is displayed in a resolution of 640×360 (the number of horizontal pixels × the number of vertical pixels) and at a frame rate of 30 fps. In this case, the notification unit 26 of the terminal 10 at the base C generates reproduction quality information containing items, such as Transmission Source: Base A, Display Type: Video Image, Resolution: 640×360, and Frame Rate: 30 fps.

In the example in FIG. 9(b), the display video image displayed on the display 11 at the base C contains the video image from the base A and a video image from the base B, the video image from the base A is displayed in a resolution of 320×180 and at a frame rate of 30 fps, and the video image from the base B is displayed in a resolution of 320×180 and at a frame rate of 15 fps. In this case, the notification unit 26 of the terminal 10 at the base C generates reproduction quality information containing items, such as Transmission Source: Base A, Display Type: Video Image, Resolution: 320×180, and Frame Rate: 30 fps, and reproduction quality information containing items, such as Transmission Source: Base B, Display Type: Video Image, Resolution: 320×180, and Frame Rate: 15 fps.

In the example in FIG. 9(c), the display video image displayed on the display 11 at the base C contains the video image from the base A, the video image from the base B, and data shared with the base B, the video image from the base A is displayed in a resolution of 320×180 and at a frame rate of 15 fps, the video image from the base B is displayed in a resolution of 320×180 and at a frame rate of 15 fps, and the data shred with the base B is displayed in a resolution of 640×360 and at a frame rate of 5 fps. In this case, the notification unit 26 of the terminal 10 at the base C generates reproduction quality information containing items, such as Transmission Source: Base A, Display Type: Video Image, Resolution: 320×180, and Frame Rate: 15 fps, reproduction quality information containing items, such as Transmission Source: Base B, Display Type: Video Image, Resolution: 320×180, and Frame Rate: 15 fps, and reproduction quality information containing items, such as Transmission Source: Base B, Display Type: Data, Resolution: 640×360, and Frame Rate: 5 fps. For the data shared with the base B, for example, data that is input from an external device, such as a PC (personal computer) that is connected to the terminal 10 at the base B is assumed. In the TV conference system 1 according to the present embodiment, the data that is input from the external devices to the terminal 10 is dealt with in the same manner as video image data is dealt with.

The notification unit 26 of the terminal 10 may generate the reproduction quality information described above in a general-purpose form, such as the XML (Extensible Markup Language) form, or in a unique form that is interpretable by the terminals 10.

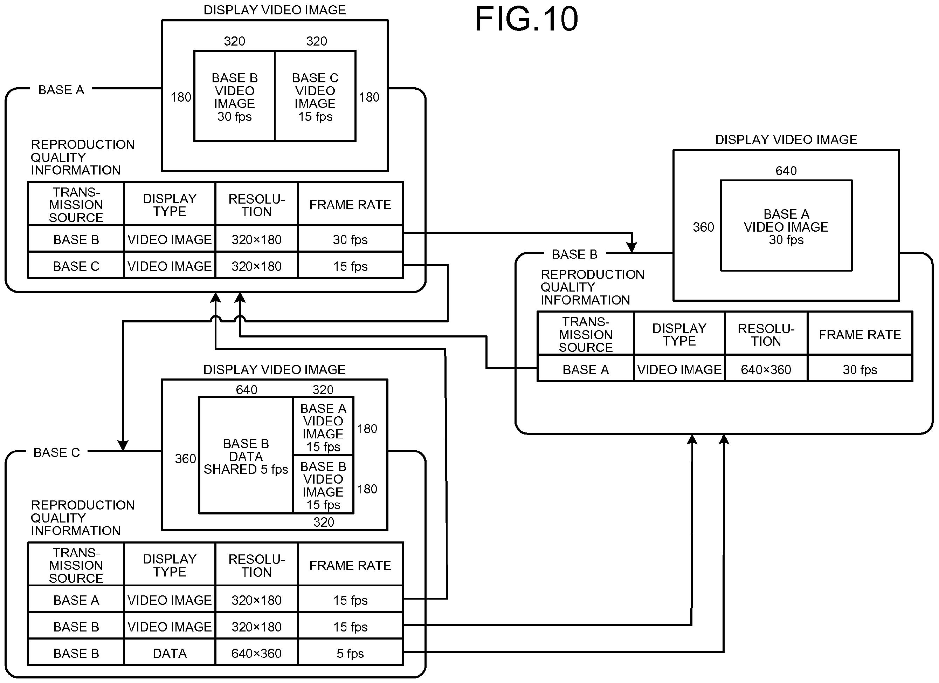

FIG. 10 is a conceptual diagram illustrating a specific exemplary notification of the reproduction quality information between terminals 10 at multiple bases. FIG. 10 illustrates reproduction quality information notified by the terminal at each base to the terminal 10 at other bases in a case where a video image is transmitted and received among the terminals at three bases that are the base A, the base B and the base C.

In the example illustrated in FIG. 10, the display video image that is displayed on the display 11 at the base A contains a video image from the base B and a video image at the base C, the video image from the base B is displayed in a resolution of 320×180 and at a frame rate of 30 fps, and the video image from the base C is displayed in a resolution of 320×180 and at a frame rate of 15 fps. In this case, the notification unit 26 of the terminal 10 at the base A generates reproduction quality information containing items, such as Transmission Source: Base B, Display Type: Video Image, Resolution: 320×180, and Frame Rate: 30 fps, and notifies the terminal 10 at the base B of the reproduction quality information. Furthermore, the notification unit 26 of the terminal 10 at the base A generates reproduction quality information containing items, such as Transmission Source: Base C, Display Type: Video Image, Resolution: 320×180, and Frame Rate: 15 fps, and notifies the terminal 10 at the base C of the reproduction quality information.

Furthermore, in the example in FIG. 10, the display video image that is displayed on the display 11 at the base B contains only the video image from the base A and the video image from the base A is displayed in a resolution of 640×360 and at a frame rate of 30 fps. In this case, the notification unit 26 of the terminal 10 at the base B generates reproduction quality information containing items, such as Transmission Source: Base A, Display Type: Video Image, Resolution: 640×360, and Frame Rate: 30 fps, and notifies the terminal 10 at the base A of the reproduction quality information.

Furthermore, in the example illustrated in FIG. 10, the display video image that is displayed on the display 11 at the base C contains the video image from the base A, the video image from the base B, and data shared with the base B, the video image from the base A is displayed in a resolution of 320×180 and at a frame rate of 15 fps, the video image from the base B is displayed in a resolution of 320×180 and at a frame rate of 15 fps, and the data shared with the base B is displayed in a resolution of 640×360 at a frame rate of 5 fps. In this case, the notification unit 26 of the terminal 10 at the base C generates reproduction quality information containing items, such as Transmission Source: Base A, Display Type: Video Image, Resolution: 320×180, and Frame Rate: 15 fps, and notifies the terminal 10 at the base A of the reproduction quality information. Furthermore, the notification unit 26 of the terminal 10 at the base C generates reproduction quality information containing items, such as Transmission Source: Base B, Display Type: Video Image, Resolution: 320×180, and Frame Rate: 15 fps and reproduction quality information containing items, such as Transmission Source: Base B, Display Type: Data, Resolution: 640×360, and Frame Rate: 5 fps, and notifies the terminal 10 at the base B of these sets of reproduction quality information.

This allows the terminal 10 at each base to know in which quality the video image transmitted to the terminal at another base is reproduced and output at the other base. The notification of the reproduction quality information may be made using, for example, the management information session Sei illustrated in FIG. 2 or may be made via the relay server 30 (via a session different from the data session Sed).

The encoding setting control unit 27 controls the setting for encoding performed by the encoding unit 17 on the basis of the reproduction quality information that is notified from the terminal 10 at the other base. For example, when the quality represented by the reproduction quality information notified from the terminal 10 at the other base (i.e., the quality of the video image from the own base that is displayed at the other base) is lower than the quality of the encoded data that is transmitted to the terminal 10 at the other base via the relay server 30 (i.e., the maximum quality of encoded data that is generated according to the current setting for encoding performed by the encoding unit 17), the encoding setting control unit 27 changes the setting for encoding performed by the encoding unit 17 (for example, the setting for layer structure) such that quality exceeding the quality represented by the reproduction quality information notified from the terminal at the other base is not contained. In a case where there are multiple other bases to which the video image is being transmitted and common encoded data is transmitted to the terminals 10 at the respective multiple bases, when the highest quality among qualities represented by multiple sets of reproduction quality information that are notified from the terminals 10 at the respective bases is lower than the quality of the common encoded data that is transmitted to the terminals 10 at the respective bases via the relay server 30, the encoding setting control unit 27 changes the setting for encoding performed by the encoding unit 17 such that the quality exceeding the highest quality among the qualities represented by the multiple sets of reproduction quality information is not contained.

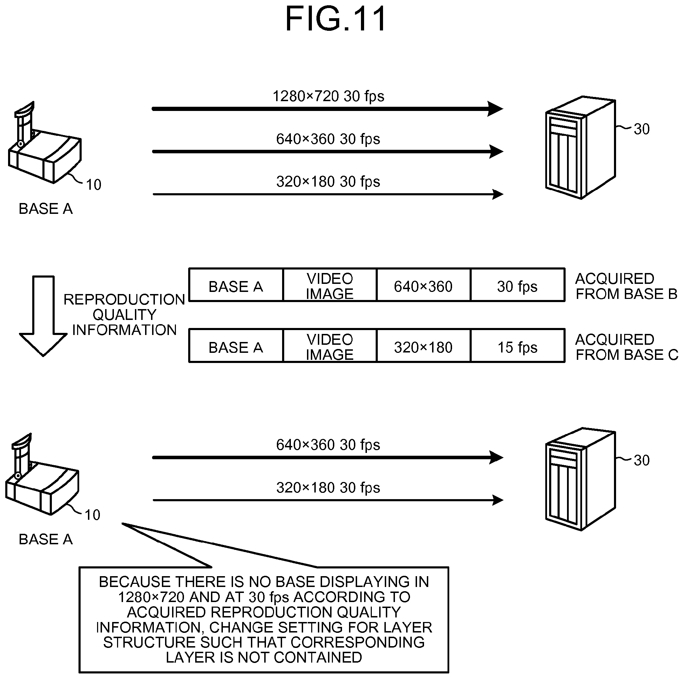

FIG. 11 is a conceptual diagram illustrating specific exemplary control performed by the encoding setting control unit 27 on a setting for encoding performed by the encoding unit 17. FIG. 11 illustrates, in a case where video images are transmitted and received between terminals 10 at three bases that are the base A, the base B and the base C, how the encoding setting control unit 27 of the terminal at the base A controls the setting for encoding performed by the encoding unit 17 on the basis of the reproduction quality information notified from the terminal 10 at the base B and the reproduction quality information that is notified from the terminal 10 at the base C.

In the example in FIG. 11, the encoding unit 17 of the terminal 10 at the base A has a setting for encoding video image data such that a low-quality video image in a resolution of 320×180 and at a frame rate of 30 fps, an intermediate-quality video image in a resolution of 640×360 and at a frame rate of 30 fps, and a high-quality video image in a resolution of 1280×720 and at a frame rate of 30 fps are contained. In the terminal 10 at the base A, the encoding unit 17 having that setting performs scalable coding on the video image data and the encoded data is transmitted from the transmitting and receiving unit 12 to the relay server 30.

Then the reproduction quality information containing the items of Resolution: 640×360 and Frame Rate: 30 fps is notified from the terminal 10 at the base B to the terminal 10 at the base A and the reproduction quality information containing the items of Resolution: 320×180 and Frame Rate: 15 fps is notified from the terminal 10 at the base C to the terminal 10 at the base A. The encoding setting control unit 27 of the terminal 10 at the base A acquires the reproduction quality information notified from the terminal 10 at the base B and the reproduction quality information notified from the terminal 10 at the base C and, from these sets of reproduction quality information, determines that there is not any base at which a high-quality video image in a resolution of 1280×720 and at a frame rate of 30 fps is displayed. The encoding setting control unit 27 of the terminal 10 at the base A changes, for example, the setting for the layer structure in encoding performed by the encoding unit 17 such that the layer corresponding to the high-quality video image in a resolution of 1280×720 and at a frame rate of 30 fps is not contained.

Accordingly, encoded data containing only a low-quality video image and an intermediate-quality video image is thereafter transmitted to the relay server 30 from the terminal 10 at the base A, which makes it possible to effectively prevent inconvenience that the bandwidth of the network between the base A and the relay server 30 is used more than necessary. In the example in FIG. 11, the setting for the layer structure in encoding performed by the encoding unit 17 is changed such that the layer corresponding to the high-quality video image is not contained. Alternatively, the setting for encoding may be changed so as to reduce the resolution and the frame rate of the layer corresponding to high-quality video images. Alternatively, the setting for encoding may be changed to integrate the layer corresponding to the high-quality video image with a lower layer.

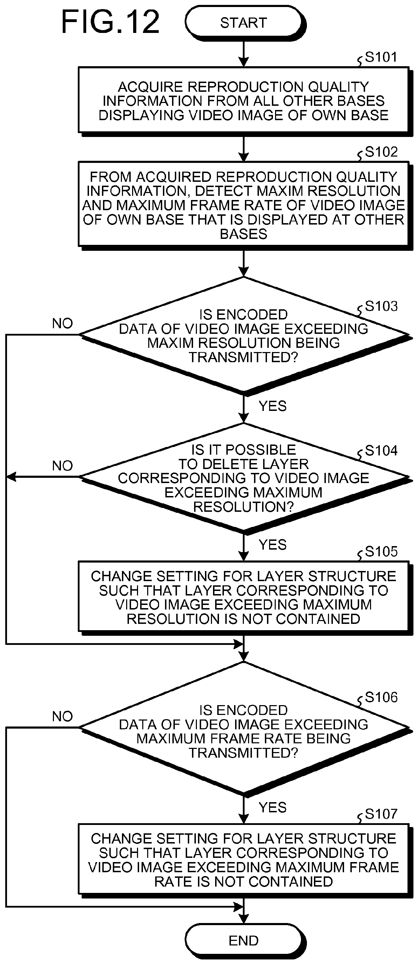

FIG. 12 is a flowchart illustrating a specific example of a process procedure performed by the encoding setting control unit 27. Once the process represented by the flowchart of FIG. 12 is started, first of all, at step S101, the encoding setting control unit 27 acquires reproduction quality information from all other bases at which a video image of the own base is being displayed. At step S102, the encoding setting control unit 27 then detects the maximum resolution and the maximum frame rate of the video image of the own base that is being displayed at those other bases from the reproduction quality information acquired at step S101.

At step S103, the encoding setting control unit 27 then determines whether encoded data of a video image exceeding the maximum resolution detected at step S102 is being transmitted to the relay server 30. For example, the encoding setting control unit 27 makes this determination by checking whether the current setting for the layer structure of the encoding unit 17, which performs scalable coding on the video image data, is a setting in which the layer of a video image exceeding the maximum resolution that is detected at step S102 is contained. When encoded data of a video image exceeding the maximum resolution is being transmitted to the relay server 30 (YES at step S103), the encoding setting control unit 27 moves to step S104 and, when no encoded data of a video image exceeding the maximum resolution is being transmitted to the relay server 30 (NO at step S103), the encoding setting control unit 27 moves to step S106.

At step S104, the encoding setting control unit 27 determines whether it is possible to delete the layer corresponding to the video image exceeding the maximum resolution that is detected at step S102. When it is possible to delete the layer corresponding to the video image exceeding the maximum resolution (YES at step S104), the encoding setting control unit 27 moves to step S105. When it is not possible to delete the layer corresponding to the video image exceeding the maximum resolution (NO at step S104), the encoding setting control unit 27 moves to step S106. The case where it is not possible to delete the layer corresponding to the video image exceeding the maximum resolution is, for example, a case where the layer corresponding to the video image exceeding the maximum resolution is a layer containing the resolution equal to or smaller than the maximum resolution, i.e., the resolution of the video image of the own base that is being displayed at another base.

At step S105, the encoding setting control unit 27 changes the setting for the layer structure of the encoding unit 17 such that the layer exceeding the maximum resolution detected at step S102 is not contained and then moves to step S106.

At step S106, the encoding setting control unit 27 determines whether encoded data of the video image exceeding the maximum frame rate detected at step S102 is being transmitted to the relay server 30. For example, the encoding setting control unit 27 makes this determination by checking whether the current setting for the layer structure of the encoding unit 17 that performs scalable coding on the video image data is a setting in which a layer of the video image exceeding the maximum frame rate detected at step S102 is contained. When encoded data of the video image exceeding the maximum frame rate is being transmitted to the relay server 30 (YES at step S106), the encoding setting control unit 27 moves to step S107. When no encoded data of the video image exceeding the maximum frame rate is being transmitted to the relay server 30 (NO at step S106), the encoding setting control unit 27 ends the process represented in the flowchart of FIG. 12.

At step S107, the encoding setting control unit 27 changes the setting for the layer structure of the encoding unit 17 such that the layer exceeding the maximum frame rate that is detected at step S102 is not contained and ends the process represented by the flowchart of FIG. 12.

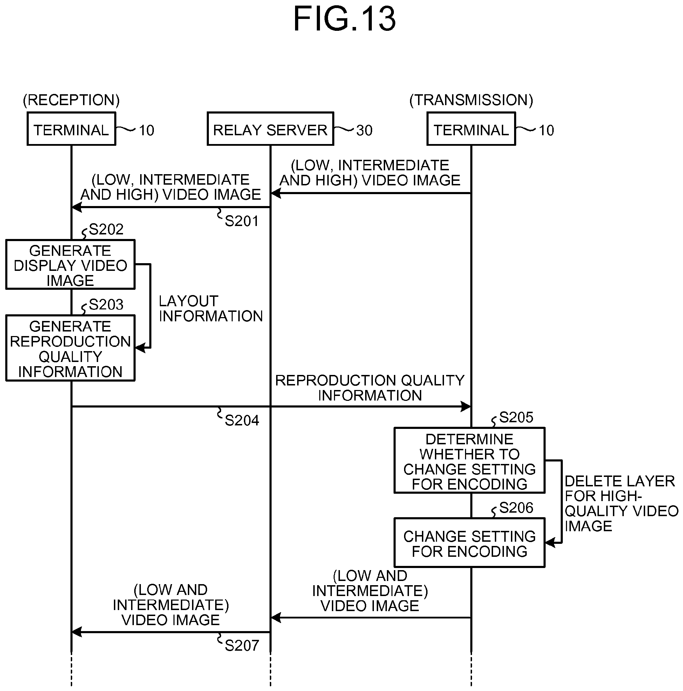

FIG. 13 is a sequence chart illustrating an overview of the process of transmitting a video image from a transmitting terminal 10 to a receiving terminal 10. FIG. 13 illustrates an example where, because the video image displayed on the receiving terminal 10 is in intermediate quality while the transmitting terminal 10 transmits a low-quality video image, a medium-quality video image, and a high-quality video image, the setting for encoding is changed such that the high-quality video image is not transmitted.

First of all, the encoded data of the low-quality video image, the intermediate-quality video image, and the high-quality video image is transmitted from the transmitting terminal 10 to the receiving terminal 10 via the relay server 30 (step S201). In the receiving terminal 10, the decoding unit 18 decodes the received encoded data and the display video image generation unit 19 generates a display image to be displayed on the display 11 (step S202). The display video image generation unit 19 passes layout information on the generated display video image to the notification unit 26.

The notification unit 26 of the receiving terminal 10 generates reproduction quality information on the basis of the layout information that is passed from the display video image generation unit 19 (step S203) and notifies the transmitting terminal 10 of the generated reproduction quality information (step S204). In this example, the reproduction quality information notified to the transmitting terminal 10 represents that the quality of the video image being displayed by the receiving terminal 10 on the display 11 is in intermediate quality.

In the transmitting terminal 10, when the transmitting terminal 10 is notified of the reproduction quality information by the receiving terminal 10, the encoding setting control unit 27 determines whether it is necessary to change the setting for encoding performed by the encoding unit 17 on the basis of the reproduction quality information (step S205). In this example, because it is not necessary to transmit the high-quality video image to the receiving terminal 10, the encoding setting control unit 27 determines that it is necessary to change the setting for encoding performed by the encoding unit 17. The encoding setting control unit 27 then changes the setting for the layer structure for encoding performed by the encoding unit 17 such that the layer corresponding to the high-quality video image is not contained (step S206).

The encoded data of the low-quality video image and the intermediate-quality video image obtained through encoding performed by the encoding unit 17 whose setting is changed is then transmitted to the receiving terminal 10 from the transmitting terminal 10 via the relay server 30 (step S207). Thereby, the inconvenience that the bandwidth of the network between the transmitting terminal 10 and the relay server 30 is used more than necessary can be effectively prevented.

As descried in detail above by giving the specific example, in the TV conference system 1 according to the present embodiment, the receiving terminal 10 notifies the transmitting terminal 10 from which the video image is transmitted of the reproduction quality information representing the quality of the video image that is actually being reproduced and output. On the basis of the reproduction quality information that is notified to the transmitting terminal 10 from the receiving terminal 10, the transmitting terminal 10 controls the setting for encoding the video image to be transmitted to the receiving terminal 10. Accordingly, the transmitting terminal 10 is able to encode only the video image in quality required by the receiving terminal 10 and transmit the video image to the relay server 30 and effectively prevent the inconvenience that the network bandwidth between the transmitting terminal 10 and the relay server 30 is used more than necessary.

### Second Embodiment

A second embodiment will be described here. In the present embodiment, the notification unit 26 of the terminal 10 generates reproduction quality information containing the compression ratio of a display video image and notifies another terminal 10 from which the video image is transmitted of the reproduction quality information. According to the present embodiment, when generating a display image to be displayed on the display 11 using the video image data that is decoded by the decoding unit 18, the display video image generation unit 19 generates information containing the compression ratio in addition to the size (resolution) and frame rate of the video image from each base as information on the layout of the generated display image and passes the information to the quality control module 25. On the basis of the layout information that is passed from the display video image generation unit 19, the notification unit 26 of the quality control module 25 generates reproduction quality information containing the compression ratio in addition to the resolution and the frame rate as reproduction quality information representing the quality of the video image from another base that is displayed by the display 11 as the display video image and notifies, via the transmitting and receiving unit 12, another transmitting terminal 10 from which the video image is transmitted of the reproduction quality information. The compression ratio in the reproduction quality information represents at which ratio the video image data of the video image from each base that is contained in the display video image is compressed and transmitted, and the compression ratio in a case where the video image that is compressed to be halved in volume is contained in the display video image is 50% and the compression ratio in a case where an uncompressed video image is contained in the display video image is 100%.

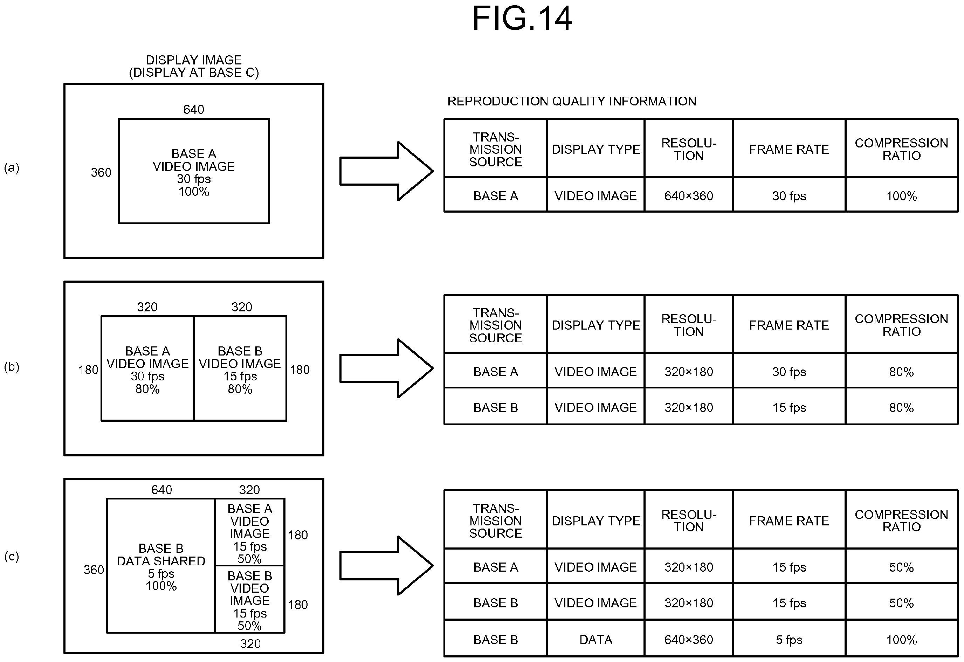

FIG. 14 is a conceptual diagram illustrating specific exemplary reproduction quality information that is generated by the notification unit 26 of the present embodiment. FIG. 14 illustrates the specific example of the reproduction quality information that is generated in the terminal 10 at the base C in a case where video images are transmitted and received among the three bases that are the base A, the base B and the base C as in the case of the example illustrated in FIG. 9.

In the example in FIG. 14(a), the display video image that is displayed on the display 11 at the base C contains only a video image from the base A, and the video image from the base A at the compression ratio of 100% (without compression) is displayed in a resolution of 640×360 (the number of pixels in the vertical and horizontal directions) and a frame rate of 30 fps. In this case, the notification unit 26 of the terminal 10 at the base C generates reproduction quality information containing items, such as Transmission Source: Base A, Display Type: Video Image, Resolution: 640×360, Frame Rate: 30 fps, and Compression Ratio: 100%.

In the example in FIG. 14(b), the display video image that is displayed on the display 11 at the base C contains the video image from the base A and a video image from the base B, the video image from the base A at a compression ratio of 80% (20% compression) is displayed in a resolution of 320×180 and at a frame rate of 30 fps, and the video image from the base B at the compression ratio of 80% is displayed in a resolution of 320×180 and at a frame rate of 15 fps. In this case, the notification unit 26 of the terminal 10 at the base C generates reproduction quality information containing items, such as Transmission Source: Base A, Display Type: Video Image, Resolution: 320×180, Frame Rate: 30 fps, and Compression Ratio: 80% and reproduction quality information containing items, such as Transmission Source: Base B, Display Type: Video Image, Resolution: 320×180, Frame Rate: 15 fps, and Compression Ratio: 80%.

In the example in FIG. 14(c), the display video image that is displayed on the display 11 at the base C contains the video image from the base A, the video image from the base B, and data shared with the base B, the video image from the base A at a compression ratio of 50% (50% compression) is displayed in a resolution of 320×180 and at a frame rate of 15 fps, the video image from the base B at a compression ratio of 50% is displayed in a resolution of 320×180 and at a frame rate of 15 fps, and the data shared with the base B at a compression ratio of 100% is displayed in a resolution of 640×360 and at a frame rate of 5 fps. In this case, the notification unit 26 of the terminal 10 at the base C generates reproduction quality information containing items, such as Transmission Source: Base A, Display Type: Video Image, Resolution: 320×180, Frame Rate: 15 fps, and Compression Ratio: 50%, reproduction quality information containing items, such as Transmission Source: Base B, Display Type: Video Image, Resolution: 320×180, Frame Rate: 15 fps, and Compression Ratio: 50%, and reproduction quality information containing items, such as Transmission Source: Base B, Display Type: Data, Resolution: 640×360, Frame Rate: 5 fps, and Compression Ratio: 100%.

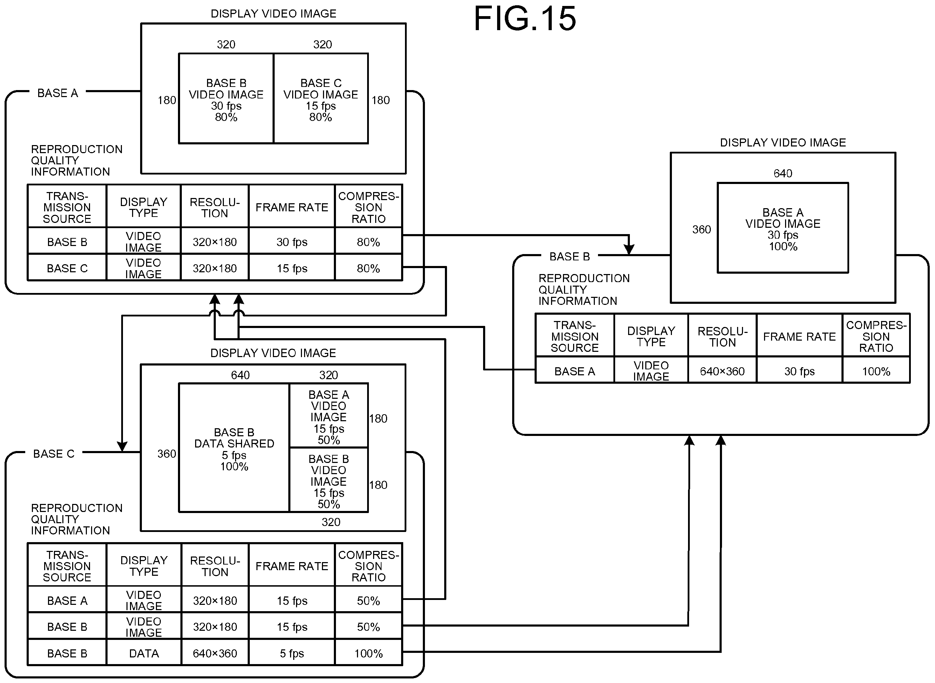

FIG. 15 is a conceptual diagram illustrating a specific exemplary notification of reproduction quality information between terminals 10 at multiple bases. FIG. 15 illustrates, in a case where a video image is transmitted and received among the terminals at three bases that are the base A, the base B and the base C, reproduction quality information notified by the terminal at each base to the terminal 10 at other bases as in the example illustrated in FIG. 10.

In the example illustrated in FIG. 15, the display video image that is displayed on the display 11 at the base A contains a video image from the base B and a video image at the base C, the video image from the base B at a compression ratio of 80% is displayed in a resolution of 320×180 and at a frame rate of 30 fps, and the video image from the base C at a compression ratio of 80% is displayed in a resolution of 320×180 and at a frame rate of 15 fps. In this case, the notification unit 26 of the terminal 10 at the base A generates reproduction quality information containing items, such as Transmission Source: Base B, Display Type: Video Image, Resolution: 320×180, Frame Rate: 30 fps, and Compression ratio: 80%, and notifies the terminal 10 at the base B of the reproduction quality information. The notification unit 26 of the terminal 10 at the base A further generates reproduction quality information containing items, such as Transmission Source: Base C, Display Type: Video Image, Resolution: 320×180, Frame Rate: 15 fps, and Compression ratio: 80%, and notifies the terminal 10 at the base C of the reproduction quality information.

Furthermore, in the example in FIG. 15, the display video image that is displayed on the display 11 at the base B contains only the video image from the base A, the video image from the base B is displayed in a resolution of 640×360 and at a frame rate of 30 fps. In this case, the notification unit 26 of the terminal 10 at the base B generates reproduction quality information containing items, such as Transmission Source: Base A, Display Type: Video Image, Resolution: 640×360, Frame Rate: 30 fps, and Compression ratio: 100%, and notifies the terminal 10 at the base A of the reproduction quality information.

Furthermore, in the example illustrated in FIG. 15, the display video image that is displayed on the display 11 at the base C contains the video image from the base A, the video image from the base B, and data shared with the base B, the video image from the base A at a compression ratio of 50% is displayed in a resolution of 320×180 and at a frame rate of 15 fps, the video image from the base B at a resolution of 50% is displayed in a resolution of 320×180 and at a frame rate of 15 fps, and the data shared with the base B at a compression ratio of 100% is displayed in a resolution of 640×360 and at a frame rate of 5 fps. In this case, the notification unit 26 of the terminal 10 at the base C generates reproduction quality information containing items, such as Transmission Source: Base A, Display Type: Video Image, Resolution: 320×180, Frame Rate: 15 fps, and Compression ratio: 50%, and notifies the terminal 10 at the base A of the reproduction quality information. Furthermore, the notification unit 26 of the terminal 10 at the base C generates reproduction quality information containing items, such as Transmission Source: Base B, Display Type: Video Image, Resolution: 320×180, Frame Rate: 15 fps, and Compression ratio: 50%, and reproduction quality information containing items, such as Transmission Source: Base B, Display Type: Data, Resolution: 640×360, Frame Rate: 5 fps, and Compression ratio: 100%, and notifies the terminal 10 at the base B of these sets of reproduction quality information.

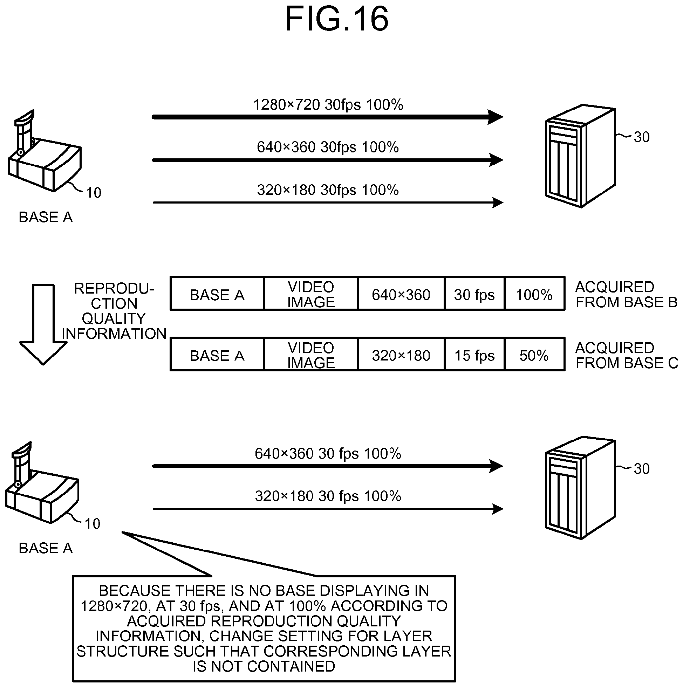

FIG. 16 is a conceptual diagram illustrating specific exemplary control performed by the encoding setting control unit 27 on the setting for encoding performed by the encoding unit 17. FIG. 16 illustrates, in a case where video images are transmitted and received between terminals 10 at three bases that are the base A, the base B and the base C, how the encoding setting control unit 27 of the terminal at the base A controls the setting for encoding performed by the encoding unit 17 on the basis of the reproduction quality information notified from the terminal 10 at the base B and the reproduction quality information that is notified from the terminal 10 at the base C as in the example illustrated in FIG. 11.

In the example in FIG. 16, the encoding unit 17 of the terminal 10 at the base A has a setting for encoding video image data such that a low-quality video image in a resolution of 320×180, at a frame rate of 30 fps, and at a compression ratio of 100%, an intermediate-quality video image in a resolution of 640×360, at a frame rate of 30 fps, and at a compression ratio of 100%, and a high-quality video image in a resolution of 1280×720, at a frame rate of 30 fps, and at a compression ratio of 100% are contained. In the terminal 10 at the base A, the encoding unit 17 having that setting performs scalable coding on the video image data and the encoded data is transmitted from the transmitting and receiving unit 12 to the relay server 30.

Then the reproduction quality information containing the items of Resolution: 640×360, Frame Rate: 30 fps, and Compression ratio: 100% is notified from the terminal 10 at the base B to the terminal 10 at the base A and the reproduction quality information containing the items of Resolution: 320×180, Frame Rate: 15 fps, and Compression ratio: 50% is notified from the terminal 10 at the base C to the terminal 10 at the base A. The encoding setting control unit 27 of the terminal 10 at the base A acquires the reproduction quality information notified from the terminal 10 at the base B and the reproduction quality information notified from the terminal 10 at the base C and, from these sets of reproduction quality information, determines that there is not any base at which a high-quality video image in a resolution of 1280×720, at a frame rate of 30 fps, and at a compression ratio of 100% is displayed. The encoding setting control unit 27 of the terminal 10 at the base A changes, for example, a setting for the layer structure in encoding performed by the encoding unit 17 such that the layer corresponding to the high-quality video image in a resolution of 1280×720, at a frame rate of 30 fps, and at a compression ratio of 100% is not contained.

Accordingly, encoded data containing only low-quality video images and intermediate-quality video images is transmitted to the relay server 30 from the terminal 10 at the base A thereafter, which makes it possible to effectively prevent the inconvenience that the bandwidth of the network between the base A and the relay server 30 is used more than necessary.

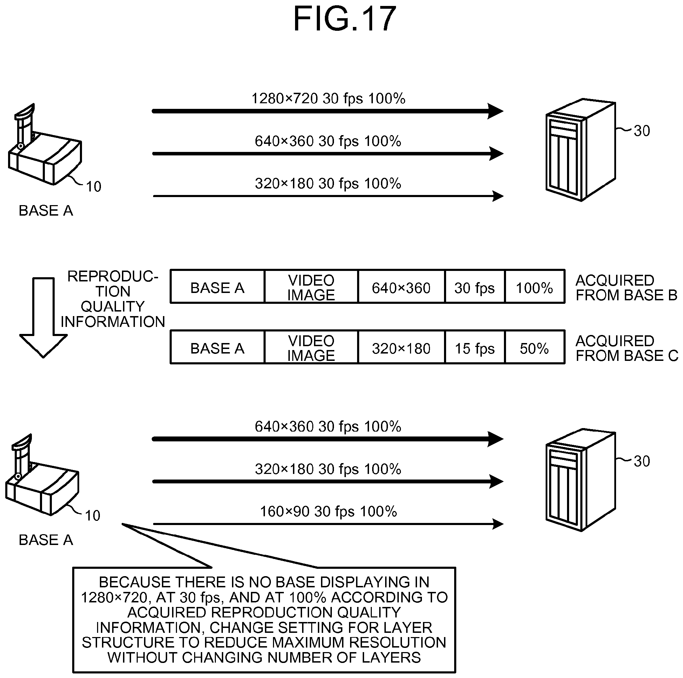

In the example in FIG. 16, the setting for the layer structure in coding performed by the encoding unit 17 is changed such that the layer corresponding to the high-quality video image is not contained. Alternatively, the setting for encoding may be changed so as to reduce the resolution and the frame rate of the layer corresponding to high-quality video image. FIG. 17 illustrates an example in which setting for encoding is changed to lower the maximum resolution without changing the number of layers of encoded data.

In the example in FIG. 17, as in the example in FIG. 16, the encoding setting control unit 27 of the terminal 10 at the base A acquires the reproduction quality information notified from the terminal 10 at the base B and the reproduction quality information notified from the terminal 10 at the base C and, from these sets of reproduction quality information, determines that there is not any base at which a high-quality video image in a resolution of 1280×720, at a frame rate of 30 fps, and at a compression ratio of 100% is displayed. For this reason, the encoding setting control unit 27 of the terminal 10 at the base A, for example, changes the resolution of the high-quality video image to 640×360, changes the resolution of the intermediate-quality video image to 320×180, and changes the resolution of the low-quality video image to 160×90, i.e., changes the setting for encoding so as to lower the maximum resolution without changing the number of layers of encoded data. Thereby, the inconvenience that the bandwidth of the network between the base A and the relay server 30 is used more than necessary can be effectively prevented.

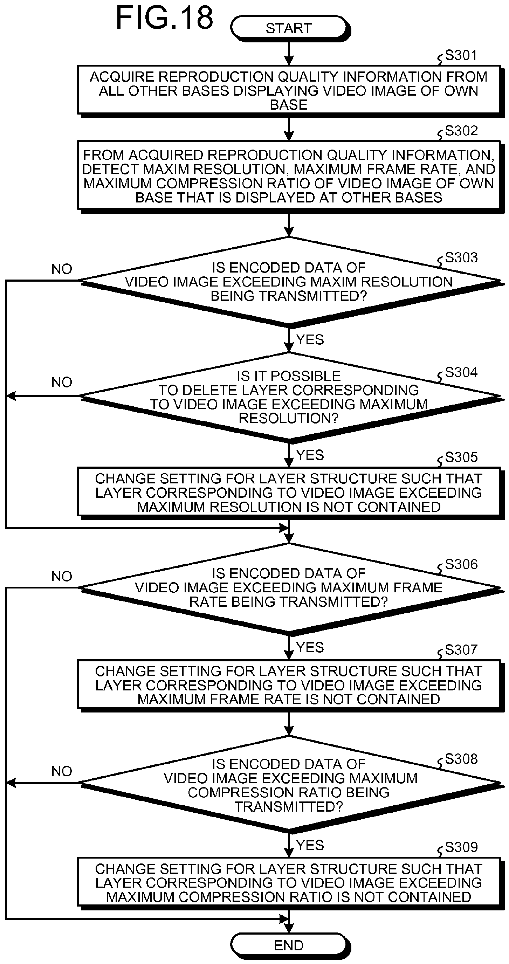

FIG. 18 is a flowchart illustrating a specific example of the process procedure performed by the encoding setting control unit 27 according to the present embodiment. Because the process from step S301 to step S307 in the flowchart of FIG. 18 is the same as the process from step S101 to step S107 in the flowchart of FIG. 12, descriptions thereof will be omitted. While the maximum resolution and the maximum frame rate of the video image of the own base that is being displayed at another base are detected on the basis of the reproduction quality information from the other base at step S102 in FIG. 12, the maximum compression ratio of the video image of the own base that is being displayed at another base is detected in addition to the maximum resolution and the maximum frame rate on the basis of the reproduction quality information from the other base at step S302 in FIG. 18.

According to the present embodiment, when the result of the determination at step S306 in FIG. 18 is NO, or when the result of the determination at step S306 is YES and then the processing at step S307 is performed, the process moves to step S308.

At step S308, the encoding setting control unit 27 determines whether the encoded data of the video image exceeding the maximum compression ratio that is detected at step S302 is being transmitted to the relay server 30. For example, the encoding setting control unit 27 makes this determination by checking whether the current setting for the layer structure of the encoding unit 17 that performs scalable coding on the video image data is a setting in which the layer of the video image exceeding the maximum compression ratio that is detected at step S302 is contained. When encoded data of the video image exceeding the maximum compression ratio is being transmitted to the relay server 30 (YES at step S308), the encoding setting control unit 27 moves to step S309. When no encoded data of the video image exceeding the maximum compression ratio is being transmitted to the relay server 30 (NO at step S308), the process represented by the flowchart of FIG. 18 ends.

At step S309, the encoding setting control unit 27 changes the setting for the layer structure of the encoding unit 17 such that the layer corresponding to the video image exceeding the maximum compression ratio that is detected at step S302 is not contained and then ends the process represented in the flowchart in FIG. 18.

In the above-described example, the resolutions, the frame rates and the compression ratios of the video image and the input data from the external device that are actually being displayed on the display 11 are dealt with as the reproduction quality information. Alternatively, the resolution, the frame rate, and the compression ratio that are different from the quality of the video image and the data that are contained in the display video image actually displayed on the display 11 but corresponds to the reproduction quality required by the user as the quality of the video image to be displayed on the display video image, for example, may be dealt with as the reproduction quality information. In this case, for example, the notification unit 26 of the terminal 10 accepts an operation of the user that specifies a video image to be displayed on a display video image, a resolution, a frame rate, or a compression ratio of data, generates reproduction quality information corresponding to the quality specified by the user, and notifies the transmitting terminal 10 of the video image and the data.

In this example, the terminal 10 from which the video image and the data is transmitted may be notified of the reproduction quality information that specifies quality exceeding the high-quality video image contained in the encoded data that is being transmitted by the terminal 10. In this case, the encoding setting control unit 27 of the terminal 10 changes the setting for encoding performed by the encoding unit 17 such that the quality specified by the reproduction quality information notified from another terminal 10 is contained in the encoded data to be transmitted from the terminal 10 to the other terminal 10.

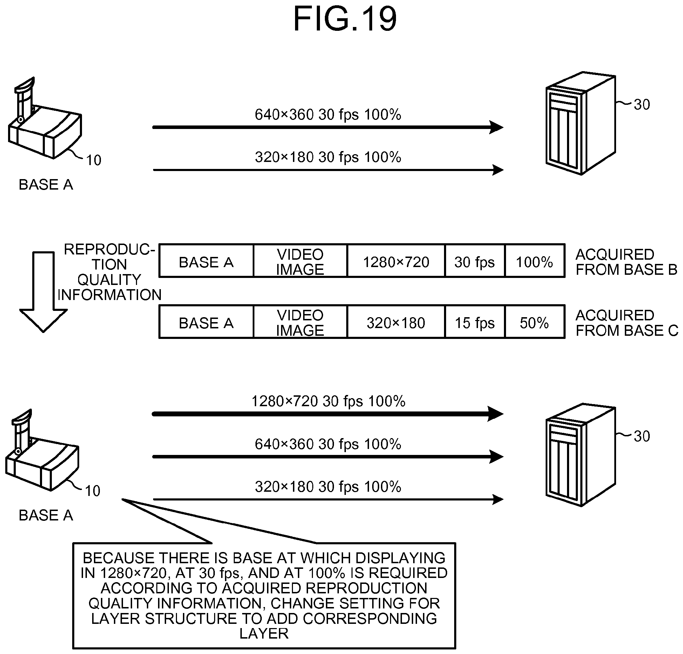

FIG. 19 is a conceptual diagram illustrating specific exemplary control performed by the encoding setting control unit 27 on the setting for encoding performed by the encoding unit 17. In the example in FIG. 19, the setting for the encoding unit 17 of the terminal 10 at the base A has a setting for encoding video image data such that a low-quality video image in a resolution of 320×180, at a frame rate of 30 fps, and at a compression ratio of 100% and an intermediate-quality video image in a resolution of 640×360, at a frame rate of 30 fps, and at a compression ratio of 100% are contained. In the terminal 10 at the base A, the encoding unit 17 having that setting performs scalable coding on the video image data and the encoded data is transmitted from the transmitting and receiving unit 12 to the relay server 30.

Then the reproduction quality information containing the items of Resolution: 1280×720, Frame Rate: 30 fps, and Compression ratio: 100% is notified from the terminal 10 at the base B to the terminal 10 at the base A and the reproduction quality information containing the items of Resolution: 320×180, Frame Rate: 15 fps, and Compression ratio: 50% is notified from the terminal 10 at the base C to the terminal 10 at the base A. The encoding setting control unit 27 of the terminal 10 at the base A acquires the reproduction quality information notified from the terminal 10 at the base B and the reproduction quality information notified from the terminal 10 at the base C and, from these sets of reproduction quality information, determines that there is a request for displaying, at the base B, a high-quality video image in a resolution of 1280×720, a frame rate of 30 fps, and a compression ratio of 100%. In this case, the encoding setting control unit 27 of the terminal 10 at the base A changes, for example, the setting for the layer structure in coding performed by the encoding unit 17 such that the layer corresponding to the high-quality video image in a resolution of 1280×720, at a frame rate of 30 fps, and at a compression ratio of 100% is added.

When, as in the above-described case, the resolution, the frame rate, the compression ratio, etc., corresponding to the reproduction quality required by the user are dealt with as the reproduction quality information, the required resolution, frame rate, and compression ratio may be specified by a range. In this case, the notification unit 26 of the terminal 10 accepts an operation of the user for specifying a range of, for example, resolution, frame rate and compression ratio of a video image and data to be displayed on the display, generates reproduction quality information containing the quality range that is specified by the user, and notifies the terminal 10 from which the video image and the data are transmitted.

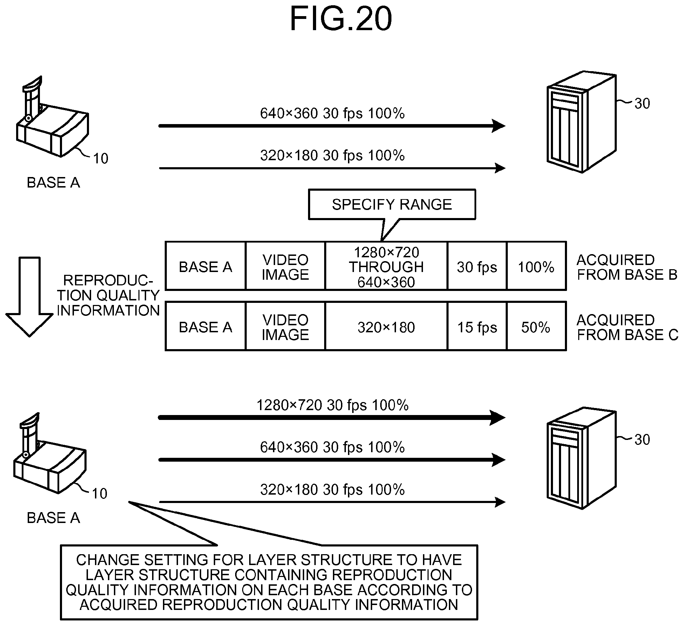

FIG. 20 is a conceptual diagram illustrating specific exemplary control performed by the encoding setting control unit 27 on the setting for encoding performed by the encoding unit 17. In the example in FIG. 20, the item of resolution of reproduction quality information that is notified from the terminal 10 at the base B to the terminal at the base A is specified by a range of 1280×720 to 640×360. In this case, on the basis of the reproduction quality information notified from the base B, the encoding setting control unit 27 of the terminal 10 at the base A determines that there is a request for displaying a video image within the range of resolution of 1280×720 to 640×360. The encoding setting control unit 27 of the terminal 10 at the base A changes the setting for the layer structure in encoding performed by the encoding unit 17 such that the layer structure covers reproduction quality information on each base as much as possible.

FIG. 21 is a flowchart illustrating a specific example of the process procedure performed by the encoding setting control unit 27. Once the process represented by the flowchart of FIG. 21 is started, first of all, at step S401, the encoding setting control unit 27 acquires reproduction quality information from all other bases at which a video image of the own base is being displayed. At step S402, the encoding setting control unit 27 then detects the maximum resolution and the maximum frame rate of the video image of the own base that is requested by those other bases from the reproduction quality information acquired at step S401.

At step S403, the encoding setting control unit 27 then determines whether encoded data covering the maximum resolution detected at step S402 is being transmitted to the relay server 30. When the encoded data being transmitted to the relay server 30 does not cover the maximum resolution detected at step S402 (NO at step S403), the encoding setting control unit 27 moves to step S404. When the encoded data covers the maximum resolution (YES at step S403), the encoding setting control unit 27 moves to step S406.

At step S404, the encoding setting control unit 27 determines whether it is possible to add the layer corresponding to the maximum resolution that is detected at step S402. When it is possible to add the layer corresponding to the maximum resolution (YES at step S404), the encoding setting control unit 27 moves to step S405. When it is not possible to add the layer corresponding to the maximum resolution (NO at step S404), the encoding setting control unit 27 moves to step S406.

At step S405, the encoding setting control unit 27 changes the setting for the layer structure of the encoding unit 17 so as to add the layer corresponding to the maximum resolution that is detected at step S402 and then moves to step S406.

At step S406, the encoding setting control unit 27 determines whether the encoded data covering the maximum frame rate that is detected at step S402 is being transmitted to the relay server 30. When the encoded data being transmitted to the relay server 30 does not cover the maximum frame rate detected at step S402 (NO at step S406), the encoding setting control unit 27 moves to step S407. When the encoded data covers the maximum frame rate (YES at step S406), the encoding setting control unit 27 moves to step S409.

At step S407, the encoding setting control unit 27 determines whether it is possible to add the layer corresponding to the maximum frame rate that is detected at step S402. When it is possible to add the layer corresponding to the maximum frame rate (YES at step S407), the encoding setting control unit 27 moves to step S408. When it is not possible to add the layer corresponding to the maximum frame rate (NO at step S407), the encoding setting control unit 27 moves to step S409.

At step S408, the encoding setting control unit 27 changes the setting for the layer structure of the encoding unit 17 so as to add the layer corresponding to the maximum frame rate that is detected at step S402 and then moves to step S409.

At step S409, the encoding setting control unit 27 determines whether encoded data covering the maximum compression ratio that is detected at step S402 is being transmitted to the relay server 30. When the encoded data being transmitted to the relay server 30 does not cover the maximum compression ratio detected at step S402 (NO at step S409), the encoding setting control unit 27 moves to step S410. When the encoded data covers the maximum compression ratio (YES at step S409), the encoding setting control unit 27 ends the process represented by the flowchart of FIG. 21.

At step S410, the encoding setting control unit 27 determines whether it is possible to add the layer corresponding to the maximum compression ratio that is detected at step S402. When it is possible to add the layer corresponding to the maximum compression ratio (YES at step S410), the encoding setting control unit 27 moves to step S411. When it is not possible to add the layer corresponding to the maximum compression ratio (NO at step S410), the encoding setting control unit 27 ends the process represented by the flowchart of FIG. 21.

At step S411, the encoding setting control unit 27 changes the setting for the layer structure of the encoding unit 17 so as to add the layer corresponding to the maximum compression ratio detected at step S402 and then ends the process represented by the flowchart of FIG. 21.

The specific embodiments of the present invention have been described above; however, the present invention is not limited to the above-described embodiments and, when carried out, can be embodied by adding various modifications and changes within the scope of the invention. In other words, the specific configurations and operations of the TV conference system 1, the terminal 10, etc., that are described in the above-described embodiments are examples only and various modifications may be made according to the use and purpose.

For example, according to the above-described embodiments, the terminal 10 includes the quality control module 25 including the notification unit 26 and the encoding setting control unit 27. Alternatively, another device, such as the management server 40, may include part or all the functions of the quality control module 25. For example, with respect to the configuration in which the management server 40 includes the notification unit 26, the management server 40 acquires layout information from the receiving terminal 10, generates reproduction quality information on the basis of the layout information, and notifies the transmitting terminal 10 of the reproduction quality information. Furthermore, with respect to the configuration in which the management server 40 includes the encoding setting control unit 27, the management server 40 acquires reproduction quality information that is notified from the receiving terminal 10, generates a control signal that controls the setting for the encoding unit 17 of the transmitting terminal 10 on the basis of the reproduction quality information, and transmits the control signal to the transmitting terminal 10.

According to the above-described embodiment, scalable coding is performed on video image data and the encoded video image data is transmitted and received between terminals 10. Alternatively, scalable coding may be performed on audio data together with or instead of the video image data and the encoded data may be transmitted and received between terminals 10. In this case, the quality of the audio data may include, for example, the sampling frequency of a sound and the bit rate of the sound.

Furthermore, according to the above-described embodiments, the TV conference system 1 is exemplified as an exemplary communication system to which the present invention is applied, which is however not a limitation. For example, the present invention is effectively applicable to various communication systems that are, for example, a telephone system, such as an IP (Internet Protocol) phone with which audio data is bi-directionally transmitted and received between terminals, and a car navigation system in which geographic data, route information, etc., are distributed from a terminal at a management center to a car navigation device that is mounted on a vehicle.

Furthermore, according to the above-described embodiments, the TV conference terminal (terminal) 10 is exemplified as an exemplary communication device to which the present invention is applied, which is however not a limitation. The present invention is effectively applicable to various communication devices, such as a PC, a tablet terminal, a smartphone, an electronic black board, and a car navigation device that is mounted on a vehicle, as long as the communication device has a function of performing scalable coding on various types of data and transmitting the encoded data and a function of decoding the encoded data and reproducing the data.

### Citation List

### Patent Literature

Patent Literature 1: Japanese Patent No. 4921488
Patent Literature 2 : WO 2007/076486 A2 (LAYERED MEDIA INC [US]; ELEFTHERIADIS ALEXANDROS [US]; SHAPIRO OFER [U) 5 July 2007 (2007-07-05)
Patent Literature 3 : US 2007/120958 A1 (SUNAHARA SEI [JP]) 31 May 2007 (2007-05-31)

## Claims

1. A communication device (10) configured to transmit or receive, respectively, encoded data that is obtained through scalable coding to or from, respectively, at least one other communication device (10), decode the received encoded data, and reproduce and output the data, the communication device (10) comprising:
a notification unit (26) configured to notify the at least one other communication device (10) from which data being reproduced and output is transmitted, of reproduction quality information representing quality of the data being reproduced and output;
**characterized by**
an encoding setting control unit (27) configured to control a setting for encoding the encoded data to be transmitted to the at least one other communication device (10) from which reproduction quality information is notified, based on the reproduction quality information that is notified from the at least one other communication device (10), wherein the reproduction quality information contains items of a communication device (10) being a transmission source, a display type, a resolution, and a frame rate,
wherein, the encoding setting control unit (27) is configured to, in a case where the at least one other communication device includes a plurality of other communication devices and the encoded data that is common among the plurality of other communication devices (10) is transmitted to the plurality of other communication devices (10), and if highest quality among qualities represented by a plurality of sets of reproduction quality information that are notified from the plurality of other communication devices (10) is lower than quality of the common encoded data that is transmitted to the plurality of other communication devices (10), change the setting for encoding the common encoded data to be transmitted to the plurality of other communication devices (10) such that quality exceeding the highest quality is not contained,
wherein the communication device (10) is configured to transmit or receive, respectively, the encoded data via a relay server (30).

2. The communication device (10) according to claim 1, wherein, the encoding setting control unit (27) is configured to, if the quality represented by the reproduction quality information that is notified from the at least one other communication device (10) is lower than quality of the encoded data that is transmitted to the at least one other communication device (10), change the setting for encoding the encoded data to be transmitted to the at least one other communication device (10) such that quality exceeding the quality represented by the reproduction quality information notified from the at least one other communication device (10) is not contained.

3. The communication device according to claim 1 or 2, wherein the data is video image data and the quality of the data contains at least any one of a resolution and a frame rate of the video image data.

4. The communication device (10) according to claim 3, wherein the encoded data is data obtained through encoding using a H.264/SVC encoding format.

5. A communication system (1) comprising:
the communication device (10) according to any one of claims 1 to 4;
the at least one other communication device (10); and
the relay server (30).

6. A communication control method that is executed by a communication device (10) configured to transmit or receive, respectively, encoded data that is obtained through scalable coding to or from, respectively, at least one other communication device (10), decode the received encoded data, and reproduce and output the data, the communication control method comprising:
notifying the at least one other communication device (10) from which data being reproduced and output is transmitted, of reproduction quality information representing quality of the data being reproduced and output; **characterized by**
controlling a setting for encoding the encoded data to be transmitted to the at least one other communication device (10) from which reproduction quality information is notified, based on the reproduction quality information that is notified from the at least one other communication device (10), wherein the reproduction quality information contains items of a communication device (10) being a transmission source, a display type, a resolution, and a frame rate,
wherein, the controlling comprises, in a case where the at least one other communication device includes a plurality of other communication devices and the encoded data that is common among the plurality of other communication devices (10) is transmitted to the plurality of other communication devices (10), and if highest quality among qualities represented by a plurality of sets of reproduction quality information that are notified from the plurality of other communication devices (10) is lower than quality of the common encoded data that is transmitted to the plurality of other communication devices (10), changing the setting for encoding the common encoded data to be transmitted to the plurality of other communication devices (10) such that quality exceeding the highest quality is not contained,
wherein the communication device (10) is configured to transmit or receive, respectively, the encoded data via a relay server (30).

## Patentansprüche

1. Kommunikationsvorrichtung (10), die konfiguriert ist, um codierte Daten jeweils zu übertragen oder zu empfangen, die durch skalierbare Codierung jeweils zu oder von mindestens einer anderen Kommunikationsvorrichtung (10) erhalten werden, um die empfangenen codierten Daten zu decodieren und die Daten zu reproduzieren und auszugeben, die Kommunikationsvorrichtung (10) umfassend:
eine Benachrichtigungseinheit (26), die konfiguriert ist, um die mindestens eine andere Kommunikationsvorrichtung (10), von der Daten, die reproduziert und ausgegeben werden, übertragen werden, über Reproduktionsqualitätsinformationen, die die Qualität der Daten, die reproduziert und ausgegeben werden, darstellten, zu benachrichtigen;
**gekennzeichnet durch**
eine Codierungseinstellungssteuerungseinheit (27), die konfiguriert ist, um eine Einstellung zum Codieren der codierten Daten, die an die mindestens eine andere Kommunikationsvorrichtung (10) übertragen werden sollen, von der Reproduktionsqualitätsinformationen mitgeteilt werden, zu steuern, basierend auf den Reproduktionsqualitätsinformationen, die von der mindestens einen anderen Kommunikationsvorrichtung (10) mitgeteilt werden, wobei die Reproduktionsqualitätsinformationen Elemente einer Kommunikationsvorrichtung (10) enthalten, bei denen es sich um eine Übertragungsquelle, eine Anzeigeart, eine Auflösung und eine Bildrate handelt,
wobei die Codierungseinstellungssteuerungseinheit (27) konfiguriert ist, um, in einem Fall, bei dem die mindestens eine andere Kommunikationsvorrichtung eine Vielzahl anderer Kommunikationsvorrichtungen umfasst und die codierten Daten, die unter der Vielzahl anderer Kommunikationsvorrichtungen (10) üblich sind, an die Vielzahl anderer Kommunikationsvorrichtungen (10) übertragen werden, und wenn eine höchste Qualität unter Qualitäten, die durch eine Vielzahl von Reihen von Reproduktionsqualitätsinformationen, die von der Vielzahl anderer Kommunikationsvorrichtungen (10) mitgeteilt werden, dargestellt werden, niedriger ist als eine Qualität der üblichen codierten Daten, die an die Vielzahl anderer Kommunikationsvorrichtungen (10) übertragen werden, die Einstellung zum Codieren der üblichen codierten Daten, die an die Vielzahl anderer Kommunikationsvorrichtungen (10) übertragen werden sollen, so zu ändern, dass eine Qualität, die die höchste Qualität überschreitet, nicht enthalten ist,
wobei die Kommunikationsvorrichtung (10) konfiguriert ist, um die codierten Daten über einen Relaisserver (30) jeweils zu übertragen oder zu empfangen.

2. Kommunikationsvorrichtung (10) nach Anspruch 1, wobei die Codierungseinstellungssteuerungseinheit (27) konfiguriert ist, um, wenn die durch die Reproduktionsqualitätsdaten dargestellte Qualität, die von der mindestens einen anderen Kommunikationsvorrichtung (10) mitgeteilt wird, niedriger ist als eine Qualität der codierten Daten, die an die mindestens eine andere Kommunikationsvorrichtung (10) übertragen werden, die Einstellung zum Codieren der codierten Daten, die an die mindestens eine andere Kommunikationsvorrichtung (10) übertragen werden sollen, so zu ändern, dass eine Qualität, die die Qualität überschreitet, die durch die Reproduktionsqualitätsinformationen, die von der mindestens einen anderen Kommunikationsvorrichtung (10) mitgeteilt werden, dargestellt wird, nicht enthalten ist.

3. Kommunikationsvorrichtung nach Anspruch 1 oder 2, wobei die Daten Videobilddaten sind und die Qualität der Daten mindestens eines von einer Auflösung und einer Bildrate der Videobilddaten enthält.

4. Kommunikationsvorrichtung (10) nach Anspruch 3, wobei die codierten Daten Daten sind, die durch Codieren unter Verwendung eines H.264/SVC-Codierungsformats erhalten werden.

5. Kommunikationssystem (1), umfassend:
die Kommunikationsvorrichtung (10) nach einem der Ansprüche 1 bis 4;
die mindestens eine andere Kommunikationsvorrichtung (10); und
den Relaisserver (30).

6. Kommunikationssteuerungsverfahren, das von einer Kommunikationsvorrichtung (10) ausgeführt wird, die konfiguriert ist, um codierte Daten jeweils zu übertragen oder zu empfangen, die durch skalierbares Codieren jeweils zu oder von mindestens einer anderen Kommunikationsvorrichtung (10) erhalten werden, um die empfangenen codierten Daten zu decodieren und die Daten zu reproduzieren und auszugeben, das Kommunikationssteuerungsverfahren umfassend:
Benachrichtigen der mindestens einen anderen Kommunikationsvorrichtung (10), von der Daten, die reproduziert und ausgegeben werden, übertragen werden, über Reproduktionsqualitätsinformationen, die die Qualität der Daten, die reproduziert und ausgegeben werden, darstellen; **gekennzeichnet durch**
ein Steuern einer Einstellung zum Codieren der codierten Daten, die an die mindestens eine andere Kommunikationsvorrichtung (10) übertragen werden sollen, von der Reproduktionsqualitätsinformationen mitgeteilt werden, basierend auf den Reproduktionsqualitätsinformationen, die von der mindestens einen anderen Kommunikationsvorrichtung (10) mitgeteilt werden, wobei die Reproduktionsqualitätsinformationen Elemente einer Kommunikationsvorrichtung (10) enthalten, bei denen es sich um eine Übertragungsquelle, eine Anzeigeart, eine Auflösung und eine Bildrate handelt,
wobei das Steuern in einem Fall, in dem die mindestens eine andere Kommunikationsvorrichtung eine Vielzahl anderer Kommunikationsvorrichtungen umfasst und die codierten Daten, die üblich unter der Vielzahl anderer Kommunikationsvorrichtungen (10) sind, an die Vielzahl anderer Kommunikationsvorrichtungen (10) übertragen werden und wenn eine höchste Qualität unter Qualitäten, die durch eine Vielzahl von Reihen von Reproduktionsqualitätsinformationen dargestellt werden, die von der Vielzahl anderer Kommunikationsvorrichtungen (10) mitgeteilt werden, niedriger ist als eine Qualität der üblichen codierten Daten, die an die Vielzahl anderer Kommunikationsvorrichtungen (10) übertragen werden, ein Ändern der Einstellung zum Codieren der üblichen codierten Daten, die an die Vielzahl anderer Kommunikationsvorrichtungen (10) übertragen werden sollen, so umfasst, dass eine Qualität, die die höchste Qualität überschreitet, nicht enthalten ist,
wobei die Kommunikationsvorrichtung (10) konfiguriert ist, um die codierten Daten über einen Relaisserver (30) jeweils zu übertragen oder zu empfangen.

## Revendications

1. Dispositif de communication (10) configuré pour émettre ou recevoir, respectivement, des données codées qui sont obtenues par un codage échelonnable depuis ou vers, respectivement, au moins un autre dispositif de communication (10), décoder les données codées reçues et reproduire et délivrer en sortie les données, le dispositif de communication (10) comprenant :
une unité de notification (26) configurée pour notifier l'au moins un autre dispositif de communication (10) depuis lequel des données reproduites et délivrées en sortie sont émises, d'informations de qualité de reproduction représentant une qualité des données reproduites et délivrées en sortie ;
**caractérisé par**
une unité de commande de réglage de codage (27) configurée pour commander un réglage pour le codage des données codées à émettre vers l'au moins un autre dispositif de communication (10) depuis lequel des informations de qualité de reproduction sont notifiées, sur la base des informations de qualité de reproduction qui sont notifiées depuis l'au moins un autre dispositif de communication (10), les informations de qualité de reproduction contenant des éléments d'un dispositif de communication (10) qui sont une source d'émission, un type d'affichage, une résolution et une cadence de trames,
l'unité de commande de réglage de codage (27) étant configurée pour, dans un cas où l'au moins un autre dispositif de communication comprend une pluralité d'autres dispositifs de communication et les données codées qui sont communes parmi la pluralité d'autres dispositifs de communication (10) sont émises vers la pluralité d'autres dispositifs de communication (10), et si une qualité la plus élevée parmi des qualités représentées par une pluralité de jeux d'informations de qualité de reproduction qui sont notifiées depuis la pluralité d'autres dispositifs de communication (10) est inférieure à une qualité des données codées communes qui sont émises vers la pluralité d'autres dispositifs de communications (10), changer le réglage pour le codage des données codées communes à émettre vers la pluralité d'autres dispositifs de communication (10) de sorte que la qualité dépassant la qualité la plus élevées ne soit pas contenue,
le dispositif de communication (10) étant configuré pour émettre ou recevoir, respectivement, les données codées via un serveur relais (30).

2. Dispositif de communication (10) selon la revendication 1, dans lequel l'unité de commande de réglage de codage (27) est configurée pour, si la qualité représentée par les informations de qualité de reproduction qui sont notifiées depuis l'au moins un autre dispositif de communication (10) est inférieure à la qualité des données codées qui sont émises vers l'au moins un autre dispositif de communication (10), changer le réglage pour le codage des données codées à émettre vers l'au moins un autre dispositif de communication (10) de sorte qu'une qualité dépassant la qualité représentée par les informations de qualité de reproduction notifiées depuis l'au moins un autre dispositif de communication (10) ne soit pas contenue.

3. Dispositif de communication selon la revendication 1 ou 2, dans lequel les données sont des données d'image vidéo et la qualité de données contient au moins un élément quelconque parmi une résolution et une cadence de trames des données d'image vidéo.

4. Dispositif de communication (10) selon la revendication 3, dans lequel les données codées dont des données obtenues par codage utilisant un format de codage H.264/SVC.

5. Système de communication (1) comprenant :
le dispositif de communication (10) selon l'une quelconque des revendications 1 à 4 ;
l'au moins un autre dispositif de communication (10) ; et
le serveur relais (30).

6. Procédé de commande de communication qui est exécuté par un dispositif de communication (10) configuré pour émettre ou recevoir, respectivement, des données codées qui sont obtenues par un codage échelonnable depuis ou vers, respectivement, au moins un autre dispositif de communication (10), décoder les données codées reçues et reproduire et délivrer en sortie les données, le procédé de commande de communication comprenant :
la notification de l'au moins un autre dispositif de communication (10) depuis lequel des données reproduites et délivrées en sortie sont émises, d'informations de qualité de reproduction représentant une qualité des données reproduites et délivrées en sortie ; **caractérisé par**
la commande d'un réglage pour le codage des données codées à émettre vers l'au moins un autre dispositif de communication (10) depuis lequel des informations de qualité de reproduction sont notifiées, sur la base des informations de qualité de reproduction qui sont notifiées depuis l'au moins un autre dispositif de communication (10), les informations de qualité de reproduction contenant des éléments d'un dispositif de communication (10) qui sont une source d'émission, un type d'affichage, une résolution et une cadence de trames,
la commande comprenant, dans un cas où l'au moins un autre dispositif de communication comprend une pluralité d'autres dispositifs de communication et les données codées qui sont communes parmi la pluralité d'autres dispositifs de communication (10) sont émises vers la pluralité d'autres dispositifs de communication (10), et si une qualité la plus élevée parmi des qualités représentées par une pluralité de jeux d'informations de qualité de reproduction qui sont notifiées depuis la pluralité d'autres dispositifs de communication (10) est inférieure à une qualité des données codées communes qui sont émises vers la pluralité d'autres dispositifs de communications (10), le changement du réglage pour le codage des données codées communes à émettre vers la pluralité d'autres dispositifs de communication (10) de sorte que la qualité dépassant la qualité la plus élevées ne soit pas contenue,
le dispositif de communication (10) étant configuré pour émettre ou recevoir, respectivement, les données codées via un serveur relais (30).
